(19) Europäisches Patentamt
European Patent Office
Office européen des brevets

(11) **EP 4 382 384 A1**

(12) **EUROPEAN PATENT APPLICATION**
published in accordance with Art. 153(4) EPC

(43) Date of publication:
**12.06.2024 Bulletin 2024/24**

(21) Application number: **21953127.4**

(22) Date of filing: **11.08.2021**

(51) International Patent Classification (IPC):
**B60W 30/16** (2020.01)     **B60W 30/09** (2012.01)
**B60W 30/095** (2012.01)

(52) Cooperative Patent Classification (CPC):
**B60W 30/09; B60W 30/095; B60W 30/16**

(86) International application number:
**PCT/CN2021/112151**

(87) International publication number:
**WO 2023/015505 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• JIN, Xinyao
  Shenzhen, Guangdong 518129 (CN)
• ZHANG, Guicheng
  Shenzhen, Guangdong 518129 (CN)
• JIANG, Feng
  Shenzhen, Guangdong 518129 (CN)

(74) Representative: **Maiwald GmbH
Engineering
Elisenhof
Elisenstrasse 3
80335 München (DE)**

(54) **VEHICLE DRIVING METHOD, APPARATUS AND SYSTEM**

(57) A vehicle driving method, apparatus, and system relate to the field of vehicle intelligent control technologies. The method includes: determining a first area associated with a first vehicle, where the first vehicle is located on a first lane, and the first area is located on the first lane and in front of the first vehicle; obtaining status information of a target vehicle, where the target vehicle is located on an adjacent lane of the first lane, and the status information of the target vehicle meets a preset condition for traveling into the first area; and controlling a following distance between the first vehicle and a second vehicle based on the status information of the target vehicle, where the second vehicle is an adjacent vehicle that is located on the first lane and that travels in front of the first vehicle. This method helps reduce a queue-jumping behavior of another vehicle and ensure driving experience.

FIG. 6

**Description**

**TECHNICAL FIELD**

Embodiments of this application relate to the field of vehicle intelligent control technologies, and in particular, to a vehicle driving method, apparatus, and system.

**BACKGROUND**

With development of an autonomous driving function of a vehicle, when implementing the autonomous driving function, the vehicle may select a target gear from a plurality of following distance adjustment gears, and control a following distance between the vehicle and a vehicle in front based on the target gear, to ensure safe driving of the vehicle. In some designs, the plurality of following distance adjustment gears of the vehicle are increased from three gears to seven gears, and an average following distance of the plurality of following distance adjustment gears is reduced, to reduce a queue-jumping behavior of another vehicle. Although this solution can prevent queue jumping of another vehicle to some extent, it is likely to bring a sense of jerking and reduce driving comfort at the same time. Therefore, driving experience cannot be ensured.

Therefore, how to control driving of a vehicle to reduce a queue-jumping behavior of another vehicle and ensure driving experience is still an important problem that needs to be urgently resolved.

**SUMMARY**

This application provides a vehicle driving method, apparatus, and system, to help reduce a queue-jumping behavior of another vehicle and ensure driving experience.

According to a first aspect, an embodiment of this application provides a vehicle driving method. The method may be applied to a vehicle driving apparatus. The vehicle driving apparatus may be an application, which may be installed or run on a chip or a component of a vehicle, or on an intelligent device such as a mobile phone or a tablet computer on the vehicle. Alternatively, the vehicle driving apparatus may be a software module, which may be deployed in electronic control units (electronic control units, ECUs) of the vehicle. Alternatively, the vehicle driving apparatus may be a newly added hardware module in the vehicle, and related determining logic or algorithm may be configured in the hardware module. The hardware module may be used as an ECU in the vehicle, and perform information transmission with another ECU by using an automotive bus, to implement driving control of the vehicle. A product form, a deployment manner, or the like of the vehicle driving apparatus is not limited in this embodiment of this application.

The method may include: determining a first area associated with a first vehicle, where the first vehicle is located on a first lane, and the first area is located on the first lane and in front of the first vehicle; obtaining status information of a target vehicle, where the target vehicle is located on an adjacent lane of the first lane, and the status information of the target vehicle meets a preset condition for traveling into the first area; and controlling a following distance between the first vehicle and a second vehicle based on the status information of the target vehicle, where the second vehicle is an adjacent vehicle that is located on the first lane and that travels in front of the first vehicle.

According to the foregoing method, the vehicle driving apparatus may flexibly perform driving control on the first vehicle based on the status information of the target vehicle around the first vehicle, to reduce a queue-jumping behavior of another vehicle by controlling the following distance between the first vehicle and the second vehicle in front of the first vehicle. In this method, the following distance between the first vehicle and the second vehicle in front may be flexibly adjusted. Therefore, the following distance may no longer be limited to a following distance adjustment gear that is fixedly set in an autonomous driving mode, thereby improving flexibility of driving control of the vehicle. In addition, when the queue-jumping behavior of the another vehicle is reduced, a sense of jerking may be reduced, and driving comfort may be improved, thereby ensuring driving experience.

For example, the status information of the target vehicle includes one or more pieces of the following information of the target vehicle: an absolute position, a position relative to the first vehicle, a speed, an acceleration, and a heading angle. For example, the preset condition includes one or more of the following: a head of the target vehicle is in front of a head of the first vehicle; a speed of the target vehicle is less than or equal to a speed of the first vehicle; a vehicle length of the target vehicle is less than or equal to a first length threshold; a transverse distance between the target vehicle and the first vehicle is less than or equal to a first safe distance threshold; and an included angle between a heading angle of the target vehicle and a heading angle of the first vehicle is less than or equal to a first angle threshold.

With reference to the first aspect, in a possible design, the method further includes: outputting the first area on a human-machine interaction HMI interface of the first vehicle, where a first boundary of the first area is associated with lane lines on two sides of the first lane, and a second boundary of the first area is associated with a head of the first vehicle and a tail of the second vehicle.

According to the foregoing method, the vehicle driving apparatus may output the first area on the HMI of the first vehicle, so that a driver of the first vehicle can learn of the to-be-protected first area and a related trend of the first area in real time.

With reference to the first aspect, in a possible design, the target vehicle is a unique vehicle in a second area, or a plurality of third vehicles located in the second area, or a vehicle with a highest queue-jumping probability in the plurality of third vehicles, and the first area is included in the second area.

According to the foregoing method, the vehicle driving apparatus may comprehensively perform monitoring and analysis based on status information of at least one target vehicle, to reduce, as much as possible, queue-jumping behaviors of all vehicles that are around the first vehicle and that may jump a queue, thereby improving driving experience.

With reference to the first aspect, in a possible design, the controlling a following distance between the first vehicle and a second vehicle based on the status information of the target vehicle includes: determining a driving route of the target vehicle based on the status information of the target vehicle; and controlling the following distance between the first vehicle and the second vehicle based on a position relationship between the driving route of the target vehicle and the first area.

According to the foregoing method, the vehicle driving apparatus may predict the driving route of the target vehicle in real time or periodically based on the status information of the target vehicle, to determine, based on the driving route, whether the target vehicle has a queue-jumping intention to travel into the first area, and then control the following distance between the first vehicle and the second vehicle based on the queue-jumping intention of the target vehicle.

With reference to the first aspect, in a possible design, the controlling a following distance between the first vehicle and a second vehicle based on the status information of the target vehicle includes: determining, based on the status information of the target vehicle and status information of the first vehicle, a probability that the first vehicle travels into the first area before the target vehicle; and controlling the following distance between the first vehicle and the second vehicle based on the probability. For example, the status information of the first vehicle includes one or more pieces of the following information of the first vehicle: an absolute position, a position relative to the target vehicle, a speed, an acceleration, and a heading angle.

According to the foregoing method, the vehicle driving apparatus may determine, based on the probability that the first vehicle travels into the first area before the target vehicle, how to perform driving control on the first vehicle, to reduce a queue-jumping behavior of another vehicle and ensure driving experience by flexibly adjusting the following distance between the first vehicle and the second vehicle in front.

With reference to the first aspect, in a possible design, the controlling the following distance between the first vehicle and the second vehicle includes: adjusting the following distance between the first vehicle and the second vehicle by controlling the first vehicle to accelerate.

According to the foregoing method, the vehicle driving apparatus may control the first vehicle to accelerate, to reduce the following distance between the first vehicle and the second vehicle. Because the following distance between the first vehicle and the second vehicle is reduced, a probability that the target vehicle abandons a queue-jumping behavior may be increased, and a probability that the first vehicle successfully prevents the queue-jumping behavior of the target vehicle may be increased. Optionally, the vehicle driving apparatus may alternatively control the first vehicle to decelerate, to increase the following distance between the first vehicle and the vehicle in front, and avoid the target vehicle in a timely manner, thereby reducing a risk of a traffic accident.

With reference to the first aspect, in a possible design, the controlling the first vehicle to accelerate includes: determining target acceleration information of the first vehicle based on the status information of the target vehicle; and controlling, based on the target acceleration information, the first vehicle to accelerate.

According to the foregoing method, the vehicle driving apparatus may determine the target acceleration information based on the status information of the target vehicle, to successfully prevent the queue-jumping behavior of the target vehicle through acceleration.

With reference to the first aspect, in a possible design, in consideration of traffic safety, the following distance between the first vehicle and the first vehicle is greater than or equal to the first safe distance threshold.

With reference to the first aspect, in a possible design, the method further includes: controlling, based on the status information of the target vehicle, the first vehicle to travel in the middle of the first lane, or near a left lane line of the first lane, or near a right lane line of the first lane.

According to a second aspect, an embodiment of this application provides a vehicle driving method, including: outputting a first picture on a human-machine interaction HMI interface of a first vehicle, where the first vehicle is located on a first lane, the first picture includes a third area and a target vehicle, the third area includes at least a first area associated with the first vehicle, the first area is located on the first lane and in front of the first vehicle, the target vehicle is located on an adjacent lane of the first lane, and status information of the target vehicle meets a preset condition for traveling into the third area; and receiving control information from a driver of the first vehicle, where the control information is used to control a following distance between the first vehicle and a second vehicle, and the control information is associated with the first picture.

With reference to the second aspect, in a possible design, a first boundary of the first area is associated with lane lines on two sides of the first lane, a second boundary of the first area is associated with a head of the first vehicle and a tail of the second vehicle, and the second vehicle is an adjacent vehicle that is located on the first lane and that travels in front of the first vehicle.

With reference to the second aspect, in a possible design, the preset condition includes one or more of the following: a head of the target vehicle is in front of the head of the first vehicle; a speed of the target vehicle is less than or equal to a speed of the first vehicle; a vehicle length of the target vehicle is less than or equal to a first length threshold; a transverse distance between the target vehicle and the first vehicle is less than or equal to a first safe distance threshold; and an included angle between a heading angle of the target vehicle and a heading angle of the first vehicle is less than or equal to a first angle threshold.

According to a third aspect, an embodiment of this application provides a vehicle driving apparatus, including: a determining unit, configured to determine a first area associated with a first vehicle, where the first vehicle is located on a first lane, and the first area is located on the first lane and in front of the first vehicle; an obtaining unit, configured to obtain status information of a target vehicle, where the target vehicle is located on an adjacent lane of the first lane, and the status information of the target vehicle meets a preset condition for traveling into the first area; and a control unit, configured to control a following distance between the first vehicle and a second vehicle based on the status information of the target vehicle, where the second vehicle is an adjacent vehicle that is located on the first lane and that travels in front of the first vehicle.

With reference to the third aspect, in a possible design, the apparatus further includes: an output unit, configured to output the first area on a human-machine interaction HMI interface of the first vehicle, where a first boundary of the first area is associated with lane lines on two sides of the first lane, and a second boundary of the first area is associated with a head of the first vehicle and a tail of the second vehicle.

With reference to the third aspect, in a possible design, the target vehicle is a unique vehicle in a second area, or a plurality of third vehicles located in the second area, or a vehicle with a highest queue-jumping probability in the plurality of third vehicles, and the first area is included in the second area.

With reference to the third aspect, in a possible design, the control unit is configured to: determine a driving route of the target vehicle based on the status information of the target vehicle; and control the following distance between the first vehicle and the second vehicle based on a position relationship between the driving route of the target vehicle and the first area.

With reference to the third aspect, in a possible design, the control unit is configured to: determine, based on the status information of the target vehicle and status information of the first vehicle, a probability that the first vehicle travels into the first area before the target vehicle; and control the following distance between the first vehicle and the second vehicle based on the probability.

With reference to the third aspect, in a possible design, the control unit is configured to adjust the following distance between the first vehicle and the second vehicle by controlling the first vehicle to accelerate.

With reference to the third aspect, in a possible design, the control unit is configured to: determine target acceleration information of the first vehicle based on the status information of the target vehicle; and control, based on the target acceleration information, the first vehicle to accelerate.

With reference to the third aspect, in a possible design, the preset condition includes one or more of the following: a head of the target vehicle is in front of the head of the first vehicle; a speed of the target vehicle is less than or equal to a speed of the first vehicle; a vehicle length of the target vehicle is less than or equal to a first length threshold; a transverse distance between the target vehicle and the first vehicle is less than or equal to a first safe distance threshold; and an included angle between a heading angle of the target vehicle and a heading angle of the first vehicle is less than or equal to a first angle threshold.

With reference to the third aspect, in a possible design, the following distance between the first vehicle and the first vehicle is greater than or equal to the first safe distance threshold.

According to a fourth aspect, an embodiment of this application provides a vehicle driving apparatus, including: an output unit, configured to output a first picture on a human-machine interaction HMI interface of a first vehicle, where the first vehicle is located on a first lane, the first picture includes a third area and a target vehicle, the third area includes at least a first area associated with the shown first vehicle, the first area is located on the first lane and in front of the first vehicle, the target vehicle is located on an adjacent lane of the first lane, and status information of the target vehicle meets a preset condition for traveling into the third area; and a receiving unit, configured to receive control information from a driver of the first vehicle, where the control information is used to control a following distance between the first vehicle and a second vehicle, and the control information is associated with the first picture.

With reference to the fourth aspect, in a possible design, a first boundary of the first area is associated with lane lines on two sides of the first lane, a second boundary of the first area is associated with a head of the first vehicle and a tail of the second vehicle, and the second vehicle is an adjacent vehicle that is located on the first lane and that travels in front of the first vehicle.

With reference to the fourth aspect, in a possible design, the preset condition includes one or more of the following: a head of the target vehicle is in front of the head of the first vehicle; a speed of the target vehicle is less than or equal to a speed of the first vehicle; a vehicle length of the target vehicle is less than or equal to a first length threshold; a transverse distance between the target vehicle and the first vehicle is less than or equal to a first safe distance threshold; and an included angle between a heading angle of the target vehicle and a heading angle of the first vehicle is less than or equal to a first angle threshold.

According to a fifth aspect, an embodiment of this application provides a vehicle driving apparatus, including a processor and a memory. The memory is configured to store a program, and the processor is configured to execute the program stored in the memory, so that the apparatus implements the method according to any one of the first aspect and the possible designs of the first aspect or the method according to any one of the second aspect and the possible designs of the second aspect.

According to a sixth aspect, an embodiment of this application provides a vehicle driving system, including the vehicle driving apparatus according to any one of the third aspect and the possible designs of the third aspect, and the vehicle driving apparatus according to any one of the fourth aspect and the possible designs of the fourth aspect.

According to a seventh aspect, an embodiment of this application provides a computer-readable storage medium. The computer-readable storage medium stores program code, and when the program code is run on a computer, the computer is enabled to perform the method according to the first aspect and the possible designs of the first aspect; or when the program code is run on a computer, the computer is enabled to perform the method according to the second aspect and the possible designs of the second aspect.

According to an eighth aspect, an embodiment of this application provides a computer program product. When the computer program product is run on a computer, the computer is enabled to perform the method according to the first aspect and the possible designs of the first aspect, or perform the method according to the second aspect and the possible designs of the second aspect.

According to a ninth aspect, an embodiment of this application provides a chip system. The chip system includes a processor, configured to invoke a computer program or computer instructions stored in a memory, so that the processor performs the method according to the first aspect and the possible designs of the first aspect, or performs the method according to the second aspect and the possible designs of the second aspect.

With reference to the ninth aspect, in a possible implementation, the processor may be coupled to the memory by using an interface.

With reference to the ninth aspect, in a possible implementation, the chip system may further include a memory, and the memory stores a computer program or computer instructions.

According to a tenth aspect, an embodiment of this application provides a processor. The processor is configured to invoke a computer program or computer instructions stored in a memory, so that the processor performs the method according to the first aspect and the possible designs of the first aspect, or performs the method according to the second aspect and the possible designs of the second aspect.

Based on the implementations according to the foregoing aspects, embodiments of this application may be further combined to provide more implementations.

For technical effects that can be achieved by any possible design in any one of the second aspect to the tenth aspect, refer to the descriptions of technical effects that can be achieved by any possible design in either the first aspect or the second aspect. No repeated description is provided.

**BRIEF DESCRIPTION OF DRAWINGS**

FIG. 1 shows a schematic diagram of an application scenario to which an embodiment of this application is applicable;
FIG. 2 shows a schematic diagram of a vehicle sensing system according to an embodiment of this application;
FIG. 3 shows a schematic diagram of a vehicle system according to an embodiment of this application;
FIG. 4 and FIG. 5 show schematic diagrams of a vehicle driving scenario according to an embodiment of this application;
FIG. 6 shows a schematic flowchart of a vehicle driving method according to an embodiment of this application;
FIG. 7a, FIG. 7b, FIG. 8, FIG. 9a, FIG. 9b, FIG. 10a, and FIG. 10b show schematic flowcharts of a vehicle driving method according to an embodiment of this application;
FIG. 11 shows a schematic diagram of a vehicle driving apparatus according to an embodiment of this application;
FIG. 12 shows a schematic diagram of a vehicle driving apparatus according to an embodiment of this application; and
FIG. 13 shows a schematic diagram of a vehicle driving apparatus according to an embodiment of this application.

**DESCRIPTION OF EMBODIMENTS**

With rapid development of science and technology and increasing improvement of living standards, vehicles gradually become an important travel mode for people. A travel scenario to which a vehicle is applicable may be an expressway scenario, an urban road scenario, or the like. In the expressway scenario, because a vehicle speed is relatively high and there are many lanes, a case in which another vehicle jumps a queue is rare. However, in the urban road scenario, a queue-jumping case is relatively common. If the vehicle is in a manual driving mode, a driver may control running of the vehicle based on a driving intention of another vehicle, to reduce a queue-jumping behavior of the another vehicle. If the vehicle is in an autonomous driving mode, the vehicle may control a following distance between the vehicle and a vehicle in front based on a following distance adjustment gear that is set in the autonomous driving mode, to reduce the queue-jumping behavior of the another vehicle.

With increasing popularity of self-driving vehicles, a user may choose to purchase a high-configuration vehicle, or purchase more autonomous driving functions in a subscription manner. In some solutions, more following distance adjustment gears (for example, gears 1 to 7) are fixedly set in the autonomous driving mode, to improve an average following distance 13 meters of previous less following distance adjustment gears (for example, gears 1 to 3) to an average following distance 10 meters, to reduce a queue-jumping behavior of another vehicle.

However, in this scenario, queue jumping of another vehicle cannot be prevented due to a relatively large following distance; or queue jumping of another vehicle can be prevented to some extent, but it is likely to bring a sense of jerking and reduce driving comfort. Therefore, driving experience cannot be ensured. Therefore, how to control driving of a vehicle to reduce a queue-jumping behavior of another vehicle and ensure driving experience is still an important problem that needs to be urgently resolved.

Embodiments of this application provide a vehicle driving method, apparatus, and system to protect an area associated with a vehicle with reference to status information of another vehicle around the vehicle, to suppress a queue-jumping behavior of the another vehicle as much as possible, and improve driving experience. The method and the apparatus are based on a same technical concept. Because a problem-resolving principle of the method is similar to a problem-resolving principle of the apparatus, mutual reference may be made to implementation of the apparatus and the method. No repeated description is provided.

It should be noted that a vehicle driving solution in embodiments of this application may be applied to the Internet of Vehicles, for example, vehicle to everything (vehicle to everything, V2X), long term evolution-vehicle (long term evolution-vehicle, LTE-V), or vehicle to vehicle (vehicle to vehicle, V2V). For example, the vehicle driving solution may be applied to a vehicle having a driving movement function, or another apparatus having a driving movement function in a vehicle. The another apparatus includes but is not limited to a vehicle-mounted terminal, a vehicle-mounted controller, a vehicle-mounted module, a vehicle-mounted assembly, a vehicle-mounted component, a vehicle-mounted chip, a vehicle-mounted unit, a vehicle-mounted radar, a vehicle-mounted camera, or another sensor. The vehicle may implement the vehicle driving method provided in embodiments of this application, by using the vehicle-mounted terminal, the vehicle-mounted controller, the vehicle-mounted module, the vehicle-mounted assembly, the vehicle-mounted component, the vehicle-mounted chip, the vehicle-mounted unit, the vehicle-mounted radar, or the vehicle-mounted camera. Certainly, the control solution in embodiments of this application may also be applied to another intelligent terminal having a movement control function other than a vehicle, or set in another intelligent terminal having a movement control function other than a vehicle, or set in a component of the intelligent terminal. The intelligent terminal may be an intelligent transportation device, a smart home device, a robot, or the like, for example, including but not limited to an intelligent terminal, or a controller, a chip, a radar, a camera, another sensor, or another component in the intelligent terminal.

It should be noted that, in embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between associated objects. "At least one of the following items (pieces)" or a similar expression refers to any combination of these items, including a single item (piece) or any combination of a plurality of items (pieces). For example, at least one of a, b, or c may represent a, b, c, a-b, a-c, b-c, or a-b-c, where a, b, and c may be singular or plural.

In addition, unless otherwise specified, ordinal numbers such as "first" and "second" mentioned in embodiments of this application are used to distinguish between a plurality of objects, but are not intended to limit priorities or importance of the plurality of objects. For example, a first area and a second area are merely used to distinguish between different areas, but do not indicate that the two areas have different priorities, different importance, or the like.

With reference to accompanying drawings and embodiments, the following describes an application scenario to which an embodiment of this application is applicable.

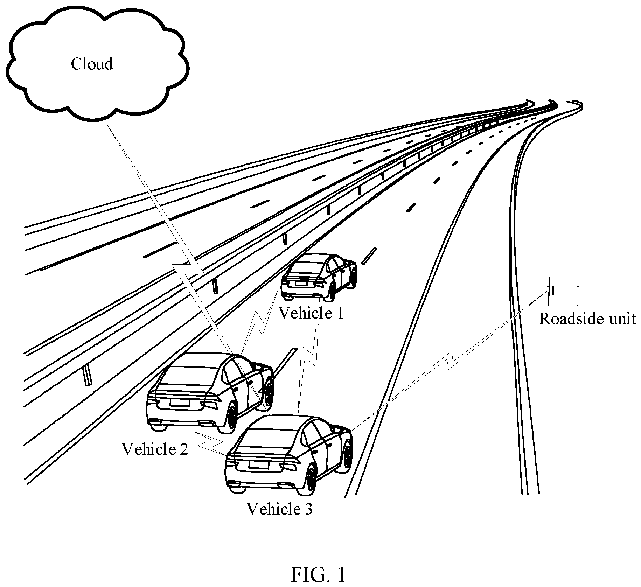

FIG. 1 shows a schematic diagram of an application scenario to which an embodiment of this application is applicable. As shown in FIG. 1, the application scenario may include a vehicle and a server. The server may be a cloud, and the cloud may include a cloud server and/or a cloud virtual machine. The server may communicate with the vehicle, to provide a plurality of services for the vehicle, for example, an over the air (over the air, OTA) service, a high-precision map service, and an autonomous driving or assisted driving service.

For example, in the over the air (OTA) service, a software manager may upload software to the cloud, and the vehicle may automatically download the software from the cloud, or a user selects to download the software from the cloud, to update local software, thereby implementing a function upgrade or a function update of a local vehicle system. For example, an infotainment (infotainment) system of the vehicle may be upgraded by using the OTA. For another example, an electronic control unit (electronic control unit, ECU) of the vehicle may be upgraded by using the OTA, and vehicle performance may be upgraded by upgrading the ECU. For another example, a vehicle suspension system may be upgraded and adjusted by using the OTA, to provide more comfortable driving or ride experience for the user.

The vehicle may download high-precision map data from the cloud to obtain a high-precision map, to provide a more accurate navigation service for the user. Road information is frequently updated. This service not only can update road information to the map in a timelier manner, but also can reduce a local storage space requirement of the vehicle. For example, for a large city or region, an entire set of high-precision maps has a large data volume. By using the high-precision map service provided by the cloud, the vehicle can obtain a high-precision map of a small area in a current position in real time when driving, and the high-precision map of the area may be released from the vehicle when not required.

The vehicle may interact with the cloud, to improve an autonomous driving or assisted driving function, thereby improving safety and travel efficiency of the vehicle. For example, the vehicle may collect road surface information and surrounding vehicle information by using a sensing apparatus installed on the vehicle, and upload the collected information to the cloud. The cloud performs driving algorithm training in different scenarios based on the collected information, continuously optimizes a driving algorithm as training data is updated, and updates the driving algorithm to the vehicle, so that an autonomous driving capability of the vehicle in responding to various scenarios is continuously improved. For another example, for a neural network-based image processing algorithm used by the sensing apparatus, training of the image processing algorithm may be completed on the cloud, and the image processing algorithm is updated as training data is updated. Correspondingly, the vehicle may obtain an updated image processing algorithm from the cloud, so that an image processing capability of the sensing apparatus may be improved. For another example, in bad weather, the vehicle may obtain weather information and road traffic accident information by using the cloud, to assist the vehicle in planning, improve travel efficiency, and reduce a risk of an accident of the vehicle. Alternatively, the cloud may send real-time road information, for example, traffic light information, to the vehicle. In this way, the vehicle may receive a traffic light change interval at an intersection ahead in advance, and calculate, based on a current vehicle speed, a time to be used by the vehicle to pass through the intersection, to determine a proper and safe pass-through opportunity and plan a driving speed of the vehicle. In this way, not only energy consumption of the vehicle may be reduced, but also driving safety may be improved.

In addition, the vehicle may obtain a third-party service by using the cloud. For example, with authorization from a driver, a courier may open a trunk of the vehicle through one-time digital authorization, and place an item in the vehicle, so that express is received when the driver is not present.

The vehicle may exchange information with the cloud through wireless communication. The wireless communication may comply with a wireless protocol of a network accessed by the vehicle, for example, V2X (C-V2X) communication of a cellular network. The cellular network is, for example, a long term evolution (long term evolution, LTE) wireless network or a 5th generation (5th generation, 5G) wireless network.

The application scenario may further include a roadside unit (roadside unit, RSU). The roadside unit may be installed on a roadside, and may communicate with the cloud and the vehicle. A roadside unit communicating with the cloud may be considered as a terminal apparatus similar to the vehicle. A roadside unit communicating with the vehicle may be considered as a terminal apparatus similar to the vehicle, or may be considered as a server apparatus of the vehicle. The roadside unit may interact with the vehicle or the cloud through wireless communication, and may communicate with the vehicle by using a dedicated short range communications (dedicated short range communications, DSRC) technology, or by using V2X (C-V2X) communication based on the cellular network, for example, based on an LTE communication protocol or a 5G communication protocol. The roadside unit may communicate with the cloud by using V2X (C-V2X) communication based on the cellular network, for example, based on the LTE communication protocol or the 5G communication protocol. The roadside unit may provide a service for the vehicle, for example, implement vehicle identity recognition, electronic toll collection, and electronic addition of penalty points. A sensing apparatus may be installed in the roadside unit, to collect road information and then provide a vehicle-road collaboration service. The roadside unit may be connected to a roadside traffic sign (for example, an electronic traffic light or an electronic speed limit sign), to implement real-time control on the traffic light or the speed limit sign, or may provide the road information to the vehicle by using the cloud or directly, to improve the autonomous driving or assisted driving function.

As shown in FIG. 1, the application scenario may include at least one vehicle. The at least one vehicle may be located on a same lane or different lanes. For example, a vehicle 1 and a vehicle 2 are located on a same lane, a vehicle 3 is located on an adjacent lane of the lane on which the vehicle 1 and the vehicle 2 are located, and the vehicle 2 is located behind the vehicle 1. In a possible case, a speed of the vehicle 1 is relatively low, and consequently, the vehicle 2 located behind the vehicle 1 cannot accelerate to drive fast. Therefore, the vehicle 2 may expect to change a lane to drive in front of the vehicle 3, to accelerate to drive away. However, such a queue-jumping behavior of the vehicle 2 to drive in front of the vehicle 3 reduces driving experience of the vehicle 3, and may also cause a risk of a traffic accident. Therefore, when implementing the autonomous driving function or the assisted driving function, the vehicle 3 further needs to perform vehicle driving control on the vehicle 3 with reference to status information of another surrounding vehicle (for example, the vehicle 1 or the vehicle 2), to suppress the queue-jumping behavior of the vehicle 2 as much as possible, and improve driving experience.

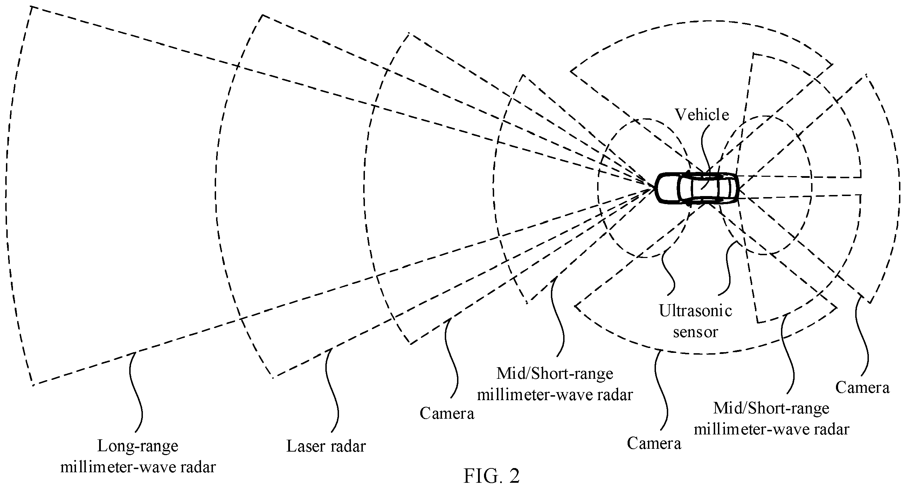

In this embodiment of this application, as shown in FIG. 2, a plurality of sensors may be installed on a vehicle (including the vehicle 1, the vehicle 2, or the vehicle 3 in FIG. 1), for example, a camera apparatus, a laser radar, a millimeter-wave radar, and an ultrasonic sensor, to obtain environment information around the vehicle by using the sensors, and analyze and process the obtained information, to implement functions such as obstacle sensing, target recognition, vehicle positioning, path planning, and driver monitoring/reminder, thereby improving safety, automation, and comfort of vehicle driving. The vehicle performs comprehensive analysis based on sensing information obtained by the plurality of sensors, and may further determine a position of the vehicle on a current lane line, sense a position of another vehicle around the vehicle, sense a relative position relationship between the vehicle and the another vehicle, and so on, to implement driving control on the vehicle with reference to status information of the another vehicle, thereby effectively suppressing a queue-jumping behavior of the another vehicle, and improving driving experience.

The camera apparatus is configured to obtain image information of an environment in which the vehicle is located. Currently, a plurality of cameras may be installed on the vehicle to obtain information from more angles. The laser radar is short for a light detection and ranging (Light Detection and Ranging, LiDAR) system, and mainly includes a transmitter, a receiver, and a signal processing unit. The transmitter is a laser emitting mechanism in the laser radar. After laser light emitted by the transmitter is irradiated onto a target object, the laser light is reflected by the target object, and reflected light converges on the receiver through a lens group. The signal processing unit is responsible for controlling emission of the transmitter, processing a signal received by the receiver, and calculating information such as a position, a speed, a distance, and/or a size of the target object.

The millimeter-wave radar uses a millimeter wave as a detection medium, and can measure a distance, an angle, a relative speed, and the like between the millimeter-wave radar and a to-be-measured object. Millimeter-wave radars may be classified into a long range radar (Long Range Radar, LRR), a mid-range radar (Mid-Range Radar, MRR), and a short range radar (Short Range Radar, SRR) based on detection ranges of the millimeter-wave radars. Main application scenarios of the LRR include adaptive cruise control, brake assist, and the like. The LRR does not have a high requirement on an angular domain width of detection, and this reflects that there is a relatively low requirement on a 3 dB beamwidth of an antenna. Main application scenarios of the MRR/SRR include automatic parking, lane change assist, blind spot detection, and the like. The MRR/SRR has a relatively high requirement on an angular domain width of detection, and this reflects that there is a relatively high requirement on the 3 dB beamwidth of the antenna, and the antenna is required to have a relatively low side lobe level. The beamwidth is used to ensure a detectable angular domain range. A low side lobe is used to reduce clutter energy reflected by the ground, reduce a false alarm probability, and ensure driving safety. The LRR may be installed in the front of the vehicle, and the MRR/SRR may be installed at four corners of the vehicle. The LRR and the MRR/SRR may be used together to implement 360-degree coverage around the vehicle.

The millimeter-wave radar may include a housing, and at least one printed circuit board (Printed circuit board, PCB) is disposed in the housing. For example, a power supply PCB and a radar PCB may be included. The power supply PCB may provide an internal use voltage of the radar, and may also provide an interface and a security function for communicating with another device. The radar PCB may provide receiving, sending, and processing of a millimeter-wave signal, and the radar PCB integrates a component for processing a millimeter-wave signal and antennas (a transmit antenna Tx and a receive antenna Rx) for receiving and sending a millimeter-wave signal. The antennas may be formed on the back of the radar PCB in a form of a microstrip array, and are configured to transmit and receive a millimeter wave.

The ultrasonic sensor may also be referred to as an ultrasonic radar, and is a sensing apparatus that uses ultrasonic detection. A working principle of the ultrasonic sensor is that an ultrasonic wave is emitted outward by using an ultrasonic wave emitting apparatus, an ultrasonic wave reflected by an obstacle is received by using a receiving apparatus, and a distance is measured based on a time difference between ultrasonic wave reflection and receiving. Currently, the distance measured by using the ultrasonic sensor may be used to indicate a distance between the vehicle and the obstacle, and assist in parking or reduce an unnecessary collision. It should be understood that the foregoing sensors are merely an example description of but not any limitation on a sensor that may be configured on the vehicle in this embodiment of this application. In another embodiment, the sensors may include but are not limited to the foregoing examples.

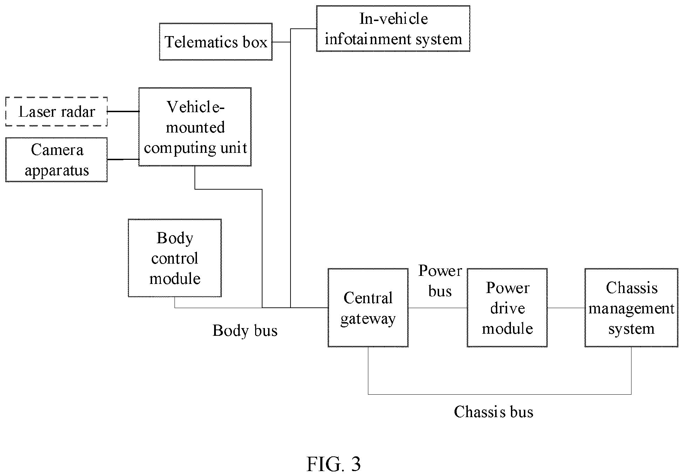

As shown in FIG. 3, the vehicle (including the vehicle 1, the vehicle 2, or the vehicle 3 in FIG. 1) may further include ECUs such as a telematics box (telematics BOX, T-Box), a central gateway (gateway), a vehicle-mounted computing unit, a power drive unit, a chassis management system, a body control module (body control module, BCM), and an in-vehicle infotainment system (or referred to as a vehicle-mounted terminal, a center console, or an in-vehicle audio and video entertainment apparatus). The ECUs transmit information based on a corresponding automotive bus (automotive bus) (including a body bus, a power bus, a chassis bus, or the like), to form a local area network inside the vehicle. Each ECU may also be referred to as a network element of the local area network inside the vehicle. A dashed-line box in FIG. 3 indicates that the laser radar is an optional apparatus.

The T-Box may communicate with the cloud, the RSU, or another vehicle. The central gateway may obtain real-time status information of the vehicle, for example, a speed, a position, and a heading angle. The vehicle-mounted computing unit may combine the sensing information obtained by the plurality of sensors, to determine relative position data of the vehicle, including a position of the vehicle on a current lane, a position of another vehicle around the vehicle, a relative position relationship between the vehicle and the another vehicle, and the like. The power drive unit may transmit calculated control information (such as a vehicle speed, an acceleration, and steering) to the chassis management system by using a motor. The chassis management system can convert the control information into drive data required by the motor. By using the automotive bus, the body control module cooperates in and coordinates intelligent driving performed when the autonomous driving function is implemented and manual driving. The in-vehicle infotainment system may store cooperation and data of each network element, and selectively display some information or prompt information on a center console display screen of the in-vehicle infotainment system, so that the user can view the information or be reminded. The automotive bus may include, for example, a controller area network (controller area network, CAN) bus, a local interconnect network (Local Interconnect Network, LIN) bus, a high-speed fault-tolerant network protocol (FlexRay) bus, a media oriented system transport (Media Oriented System Transport, MOST) bus used for automotive multimedia and navigation, and Bluetooth, a wireless local area network, or the like that is compatible with a computer network. For example, the body bus and the power bus may be CAN buses, and the chassis bus may be a CAN bus or a FlexRay bus.

In this embodiment of this application, a vehicle driving apparatus may be an application, which may be installed or run on a chip or a component of the vehicle, or on an intelligent device such as a mobile phone or a tablet computer on the vehicle. Alternatively, the vehicle driving apparatus may be a software module, which may be deployed in the foregoing ECUs of the vehicle. Alternatively, the vehicle driving apparatus may be a newly added hardware module in the vehicle, and related determining logic or algorithm may be configured in the hardware module. The hardware module may be used as an ECU in the vehicle, and perform information transmission with another ECU by using the automotive bus, to implement driving control of the vehicle. A product form, a deployment manner, or the like of the vehicle driving apparatus is not limited in this embodiment of this application.

During implementation, the vehicle driving apparatus may determine a first area associated with a first vehicle, obtain status information of a target vehicle, and control a following distance between the first vehicle and a second vehicle based on the status information of the target vehicle. The first vehicle may also be referred to as a present vehicle or a self-vehicle, and is a vehicle that needs to monitor another vehicle to implement driving control of the first vehicle, for example, the vehicle 3 in FIG. 1. A lane on which the first vehicle is currently located may be referred to as a first lane, and the first area is a to-be-protected area of the first vehicle, and may be located on the first lane and in front of the first vehicle. The target vehicle is a potential queue jumper of the first vehicle, and is located on an adjacent lane of the first lane. The status information of the target vehicle meets a preset condition for traveling into the first area, and the target vehicle may change the lane and travel into the first area, to jump a queue to travel in front of the first vehicle. The second vehicle is an adjacent vehicle that is located on the first lane and that travels in front of the first vehicle, and the second vehicle may also be referred to as a vehicle in front of the first vehicle.

In an example, when determining, based on the status information of the target vehicle, that the target vehicle has a queue-jumping intention, and the first vehicle may travel to the first area before the target vehicle, the vehicle driving apparatus may control the first vehicle to accelerate, to reduce a following distance between the first vehicle and a vehicle in front, thereby reducing a possibility that the target vehicle jumps a queue to travel in front of the first vehicle. In another example, when determining, based on the status information of the target vehicle, that the target vehicle has a queue-jumping intention, and there is no possibility or a relatively low possibility that the first vehicle travels to the first area before the target vehicle, the vehicle driving apparatus may control the first vehicle to decelerate, to increase the following distance between the first vehicle and the vehicle in front, and avoid the target vehicle in a timely manner, thereby reducing a risk of a traffic accident.

It should be noted that, in this embodiment of this application, the second vehicle is optional, that is, there may be no vehicle within a preset distance in front of the first vehicle. In this case, the first area may be an area within a preset distance in front of the vehicle. The vehicle driving apparatus may control a speed of the first vehicle based on the status information of the target vehicle, to reduce, as much as possible, a possibility that the target vehicle travels to the first area before the first vehicle.

For ease of understanding, detailed descriptions are provided below with reference to accompanying drawings and embodiments. Before the vehicle driving method in this application is described, a predefined queue-jumping scenario, a to-be-protected area of a vehicle, an analysis range, and a related evaluation parameter in an embodiment of this application are first described.

1. Queue-jumping scenario

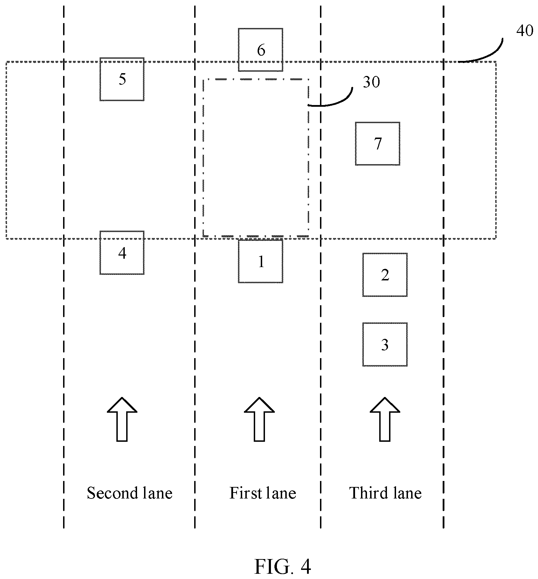

As shown in FIG. 4, a road may include at least two parallel lanes, for example, a first lane, a second lane adjacent to a left side of the first lane, and a third lane adjacent to a right side of the first lane. A vehicle 1 and a vehicle 6 travel on the first lane, a vehicle 4 and a vehicle 5 travel on the second lane, and a vehicle 2 and a vehicle 3 travel on the third lane. A vehicle on the first lane, the second lane, or the third lane may change the lane to an adjacent lane of the lane on which the vehicle is currently located, and when there is relatively plenty of driving space, the vehicle may change the lane to travel in front of a vehicle on the adjacent lane. For example, when a following distance between the vehicle 1 and the vehicle 6 (optional) on the first lane is large enough, the vehicle 4 on the second lane, and the vehicle 2, the vehicle 3, and a vehicle 7 on the third lane may all change lanes, to jump a queue to travel in front of the vehicle 1. This scenario is the queue-jumping scenario in this embodiment of this application. Generally, for a safety consideration, a specific following distance needs to be reserved between vehicles (including a manually driven vehicle and a self-driving vehicle). A larger following distance leads to a higher queue-jumping probability of a potential queue jumper.

The queue-jumping scenario may include the following queue-jumping cases:

(1) Queue jumping when driving: A queue-jumping event occurs when a target vehicle is driving. When plenty of queue-jumping space is reserved between a present vehicle and a vehicle in front, the target vehicle may choose to jump a queue to travel in front of the present vehicle. When there is no plenty of queue-jumping space between the present vehicle and the vehicle in front, a probability that the target vehicle abandons queue jumping is increased. When the target vehicle approaches the present vehicle to reduce a transverse distance between the two vehicles, a queue-jumping intention of the target vehicle is relatively obvious. Ahead of the target vehicle being located on a left side or a right side of a head of the present vehicle is a good opportunity for jumping a queue.
(2) Queue jumping when queuing: The target vehicle stops and waits, and a queue-jumping event occurs when there is a proper queue-jumping opportunity.

In the foregoing two queue-jumping cases, the following queue-jumping modes may be further included:

(1) One-step mode: Plenty of queue-jumping space is reserved between the present vehicle and the vehicle in front. The target vehicle can directly drive toward a queue-jumping position between the present vehicle and the vehicle in front. In this case, a queue-jumping intention of the target vehicle is straightforward. For example, the vehicle 4 shown in FIG. 4 may directly jump a queue from a current position to travel in front of the vehicle 1.
(2) Step-by-step mode: In a first step, the target vehicle first travels to a position parallel to a queue-jumping position between the present vehicle and the vehicle in front; and in a second step, the target vehicle travels between the present vehicle and the vehicle in front. In this case, before the target vehicle performs the queue-jumping action in the second step, a queue-jumping intention is not obvious. For example, the vehicle 7 shown in FIG. 4 first travels to a position parallel to an area 30 between the vehicle 1 and the vehicle 6, and then may travel to the area 30 from a current position.

It should be noted that, in FIG. 4, only a straight road is used as an example to describe the queue-jumping scenario in this embodiment of this application, and the queue-jumping scenario is not limited thereto. In another embodiment, the queue-jumping scenario may include a scenario of a curved road (that is, a road has a specific bending radian, and a bending degree is not limited). In addition, for a special vehicle, for example, an ultra-wide vehicle or an ultra-long vehicle, the vehicle is not processed as a potential queue-jumping target vehicle on an adjacent lane.

2. To-be-protected area of a first vehicle (that is, a first area associated with the first vehicle)

In this embodiment of this application, the to-be-protected area of the vehicle (that is, the first vehicle) is a predetermined area in front of the vehicle. The "to-be-protected area" means that the area is not expected to be first occupied by another vehicle (that is, the target vehicle, for example, the vehicle 2, the vehicle 3, the vehicle 4, or the vehicle 7) other than the present vehicle (for example, the vehicle 1). In a driving process of the vehicle, a position of the to-be-protected area dynamically changes with status information of the present vehicle, including but not limited to a change of an area position, a change of an area size, and the like.

The vehicle 1 is used as an example. In the mode ①, the to-be-protected area may be determined based on a safe distance in front of the vehicle 1 and a speed of the vehicle 1. For example, if the safe distance Dist = 3 seconds (S), and the speed V of the vehicle 1 = 60 kilometers per hour (Km/h), the to-be-protected area in front of the vehicle 1 should be an area within a distance of about 50 meters in front of a head of the vehicle 1, for example, an area in which a dashed-line box 30 shown in FIG. 4 is located.

The vehicle 1 is used as an example. In the mode ②, the to-be-protected area may be determined based on the head of the vehicle 1, lane lines on two sides of a lane on which the vehicle 1 is currently located, and a tail of the vehicle 6 in front. To be specific, a first boundary (or referred to as a transverse boundary) of the to-be-protected area may be associated with the lane lines on two sides of the current lane (that is, the first lane), and a second boundary (or referred to as a longitudinal boundary) may be associated with the head of the vehicle 1 and the tail of the vehicle in front (that is, the vehicle 6). During specific implementation, the first boundary of the to-be-protected area may be positions of the lane lines on two sides of the current lane, and the second boundary may be positions of the head of the vehicle 1 and a parking space of the vehicle 6. A size of the to-be-protected area determined in this manner may be greater than, equal to, or less than a size of the area in which the dashed-line box 30 shown in FIG. 4 is located.

It should be noted that the foregoing two examples are merely possible manners of determining the to-be-protected area of the vehicle, and impose no limitation. In another embodiment, the to-be-protected area may alternatively be determined in another manner. This is not limited in this embodiment of this application. During implementation, both the foregoing two modes may be configured on a vehicle driving apparatus, so that the vehicle driving apparatus may determine the to-be-protected area based on an actual scenario in which the vehicle is located. For example, if there is no vehicle in front of the present vehicle 1, the to-be-protected area may be determined based on the foregoing mode ①; or if there is a vehicle in front of the vehicle 1, the to-be-protected area may be determined based on the foregoing mode ②.

3. Analysis range of the first vehicle (that is, a second area associated with the first vehicle)

In this embodiment of this application, the analysis range may be determined based on a position of the vehicle on the road, and the analysis range may be used to determine a potential queue-jumping vehicle (or referred to as a target vehicle) of the vehicle.

Generally, the analysis range may include several lane sections in front of the vehicle. As shown in FIG. 4, the vehicle 1 is used as an example. An analysis range of the vehicle 1 is a range shown by a dashed-line box 40, including a section of the first lane on which the vehicle 1 is currently located, a section of the second lane adjacent to the left side of the first lane, and a section of the third lane adjacent to the right side of the second lane. The vehicle 4, the vehicle 5, and the vehicle 7 in the range are potential queue-jumping vehicles of the vehicle 1, and the vehicle 1 needs to monitor and analyze status information of the vehicles in the range to perform driving control on the vehicle 1, to suppress a queue-jumping behavior of another vehicle, and improve driving experience.

It should be noted that FIG. 4 is merely an example of the analysis range, and does not limit a graph, a position, or the like of the analysis range. In another implementation, the analysis range may alternatively be defined in another manner. For example, the analysis range may be a sector area in which the present vehicle is used as a circle center, or may be a trapezoid, an irregular polygon, or the like. This is not limited in this embodiment of this application. Generally, the analysis range needs to include at least the to-be-protected area (not limited to a rectangular area) of the vehicle, and a section of an adjacent lane included in the analysis range needs to be determined based on a road condition of the lane on which the vehicle is currently located. For example, in FIG. 4, for the vehicle 4 or the vehicle 2, a lane on which the vehicle 4 or the vehicle 2 is currently located has only one adjacent lane. Therefore, an analysis range of the vehicle 4 may include a section of the second lane in front of the vehicle 4 and a section of the first lane adjacent to a right side of the second lane. Similarly, an analysis range of the vehicle 2 may include a section of the third lane in front of the vehicle 2 and a section of the first lane adjacent to a left side of the third lane.

4. Evaluation parameters related to queue jumping

(1) Relative traffic efficiency

Generally, a real intention of queue-jumping driving of a vehicle is to quickly pass through a current road section. Generally, a queuejumping behavior occurs when traffic efficiency of a lane on which a queue-jumping vehicle is located is less than traffic efficiency of a lane to which the vehicle intends to jump a queue. Therefore, in this embodiment of this application, "relative traffic efficiency" may be defined as a measurement indicator. An average lane speed of each of at least two parallel lanes is analyzed and calculated, and relative traffic efficiency of another lane relative to a to-be-analyzed present vehicle is calculated, to determine whether a queue-jumping trigger condition of the present vehicle is met, that is, to determine whether the present vehicle is in a queue-jumping scenario. If the queue-jumping trigger condition of the present vehicle is met, the present vehicle may start a queue-jumping game program, to perform vehicle driving control on the present vehicle by using the queue-jumping game program, to suppress queue-jumping driving of another vehicle as much as possible. If the queue-jumping trigger condition of the present vehicle is not met, the queue-jumping game program may not be started.

For example, the vehicle 1 in FIG. 4 is used as the first vehicle. Vehicles (for example, the vehicle 4 and the vehicle 5) that enter the second area and that are on the second lane may be used as samples to calculate relative traffic efficiency of the second lane (relative to the vehicle 1), and a vehicle (for example, the vehicle 7) that enters the second area and that is on the third lane is used as a sample to calculate relative traffic efficiency of the third lane (relative to the vehicle 1). A calculation process is as follows:

$$k(4) = \frac{v(4)}{v(1)}; \quad k(5) = \frac{v(5)}{v(1)};$$

and $K_2$ = Weighted average value of $\{k(4), k(5) ...\}$; and

$$k(7) = \frac{v(7)}{v(1)};$$

and $K_3$ = Weighted average value of $\{k(7) ...\}$.

Herein, $v(1)$ represents a speed of the vehicle 1; $v(4)$, $v(5)$, and v(7) respectively represent speeds of the vehicle 4, the vehicle 5, and the vehicle 7; $K_2$ represents the relative traffic efficiency of the second lane; and $K_3$ represents the relative traffic efficiency of the third lane.

In this embodiment of this application, the queue-jumping trigger condition of the present vehicle may include: Relative traffic efficiency of an adjacent lane of the lane on which the first vehicle is currently located is less than or equal to a first threshold. For example, the first threshold may be 1. If $K_2$ or $K_3$ is less than or equal to 1, it indicates that the traffic efficiency of the second lane or the third lane is less than or equal to traffic efficiency of the first lane, and there is a possibility that a vehicle on the second lane or the third lane changes the lane to the first lane to increase traffic efficiency of the vehicle. If $K_2$ or $K_3$ is greater than 1, it indicates that the traffic efficiency of the second lane or the third lane is greater than the traffic efficiency of the first lane. The vehicle on the second lane or the third lane cannot achieve a relatively good benefit in traffic of the vehicle by changing the lane to the first lane, and the possibility that the vehicle on the second lane or the third lane changes the lane to the first lane is relatively low.

Therefore, in a possible implementation, the first vehicle may monitor and analyze a status of a vehicle on an adjacent lane of the first lane on which the first vehicle is currently located, to determine relative traffic efficiency of a vehicle on another lane relative to the first vehicle, thereby determining whether the first vehicle is in a queue-jumping scenario, and determining whether to start the queue-jumping game program to perform driving control on the first vehicle. If two adjacent lanes of the first vehicle both meet the foregoing queue-jumping trigger condition, the first vehicle may further determine a lane and a vehicle with a stronger queue-jumping intention by comparing relative traffic efficiency of the two adjacent lanes. For example, if $K_2 < K_3$, the traffic efficiency of the second lane is lower, and a vehicle on the second lane may have a stronger queue-jumping intention. The vehicle on the second lane may be preferentially monitored and analyzed.

(2) Speed

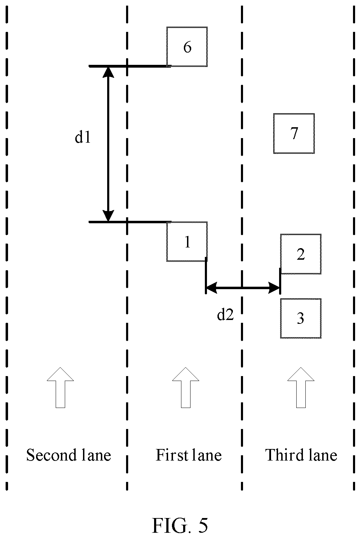

As shown in FIG. 5, the vehicle 1 is the first vehicle, the vehicle 6 is a second vehicle, and the vehicle 2 is the target vehicle. A longitudinal following distance between the first vehicle and the second vehicle is d1, and a transverse distance between the first vehicle and the target vehicle is d2.

Generally, larger d1 leads to a higher queue-jumping success rate of the target vehicle. Generally, d1 is related to a speed of the vehicle. A higher speed of the vehicle leads to a larger required braking distance, so that d1 is larger. However, in this case, although a queue-jumping success rate of the target vehicle is relatively high, a queue-jumping benefit brought to the target vehicle is relatively low. For example, the queue-jumping benefit is expressed as follows:

$$\rho(2) = \frac{K}{v(2)}.$$

Herein, $\rho(2)$ represents the queue-jumping benefit of the vehicle 2, $v(2)$ represents a speed of the vehicle 2, and K represents relative traffic efficiency of a lane on which the target vehicle is located. That is, a higher vehicle speed leads to a lower queue-jumping benefit of another vehicle. Generally, in an urban congested road section or a low-speed road section, the queue-jumping benefit of the another vehicle is relatively high.

Therefore, in a possible implementation, the first vehicle may monitor and analyze a status of a vehicle on an adjacent lane of the first lane on which the first vehicle is currently located, to determine a queue-jumping benefit of a vehicle on another lane, thereby determining a target vehicle with a relatively strong queue-jumping intention, so that the first vehicle preferentially monitors and analyzes the target vehicle.

It should be noted that, in this embodiment of this application, defining the queue-jumping benefit of the vehicle based on the vehicle speed is merely an example rather than a limitation. In another embodiment, for example, the queue-jumping benefit of the vehicle may alternatively be determined based on parameters such as an acceleration and a transverse following distance. This is not limited in this embodiment of this application.

(3) Safe distance

As shown in FIG. 5, the vehicle 1 is the first vehicle, the vehicle 6 is the second vehicle, and the vehicle 2 is the target vehicle. The longitudinal following distance between the first vehicle and the second vehicle is d1, and the transverse following distance between the first vehicle and the target vehicle is d2.

Generally, an effect of suppressing queue jumping of another vehicle may be achieved to some extent by controlling d1. Smaller d1 leads to a better effect of suppressing queue jumping of another vehicle. In addition, smaller d1 leads to a higher risk of a rear-end accident between the first vehicle and a vehicle in front (that is, the second vehicle). Therefore, a minimum longitudinal safe distance (or referred to as a first safe distance threshold) between the first vehicle and the vehicle in front further needs to be controlled.

Therefore, in this embodiment of this application, the first safe distance threshold between the first vehicle and the second vehicle may be used as an algorithm input parameter. When driving control on the first vehicle is implemented based on status information of the target vehicle, it is ensured that a minimum vehicle distance requirement is met between the first vehicle and the second vehicle, to reduce a risk of a traffic accident.

Similarly, when driving control on the first vehicle is implemented based on the status information of the target vehicle, the first vehicle may further control the transverse following distance d2 between the first vehicle and the target vehicle, and use a minimum transverse safe distance (or referred to as a second safe distance threshold) between the first vehicle and the target vehicle as an algorithm input parameter to ensure that a minimum vehicle distance requirement is met between the first vehicle and the target vehicle, to reduce a risk of a traffic accident.

It should be noted that the foregoing related parameters are merely examples of rather than limitations on parameters in this embodiment of this application. In another embodiment, another parameter required by an algorithm may be further defined, for example, an acceleration, a heading angle, and a position of the target vehicle relative to the first vehicle. This is not limited in this embodiment of this application.

The following describes the vehicle driving method in embodiments of this application with reference to a method flowchart.

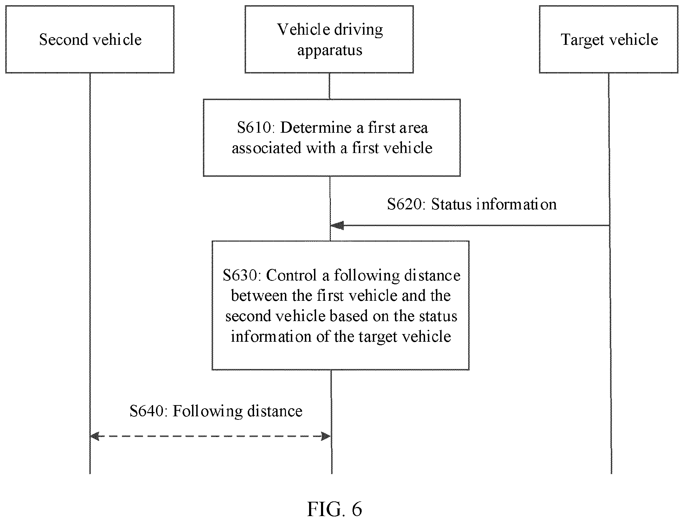

FIG. 6 shows a schematic flowchart of a vehicle driving method according to an embodiment of this application. The method may be implemented by the foregoing vehicle driving apparatus, and the vehicle driving apparatus may be deployed in a first vehicle. As shown in FIG. 6, the method may include the following steps.

S610: The vehicle driving apparatus determines a first area associated with the first vehicle.

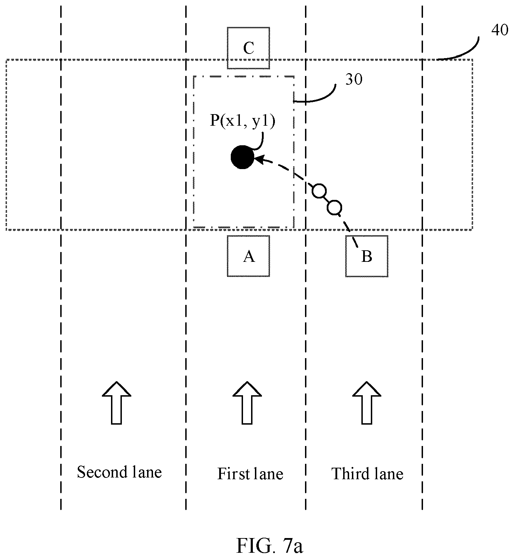

As shown in FIG. 7a, a vehicle A is used to represent the first vehicle. A lane on which the first vehicle is currently located is referred to as a first lane, and the first area may be located on the first lane and in front of the first vehicle, and may be represented by a dashed-line box 30.

In an example, there is no second vehicle in front of the first vehicle, and the first area may be determined based on a safe distance that needs to be retained at least in front of the first vehicle and a speed of the first vehicle. For example, if the safe distance Dist $\geq$ 3 seconds (S), and the speed V of the first vehicle = 60 kilometers per hour (Km/h), the first area in front of the first vehicle should be an area within a distance of about 50 meters in front of a head of the first vehicle, for example, an area in which the dashed-line box 30 shown in FIG. 7a is located. In this case, lane lines on two sides of the first lane may be used as a first boundary of the first area, and the head of the first vehicle and a safety boundary line in front of the first vehicle may be used as a second boundary of the first area.

In another example, there is a second vehicle in front of the first vehicle (the second vehicle is an adjacent vehicle that is located on the first lane and that travels in front of the first vehicle). The first area may be determined based on the head of the first vehicle, the lane lines on two sides of the first lane on which the first vehicle is currently located, and a tail of the second vehicle in front. To be specific, the first boundary (or referred to as a transverse boundary) of the first area may be associated with the lane lines on two sides of the first lane, and the second boundary (or referred to as a longitudinal boundary) may be associated with the head of the first vehicle and the tail of the second vehicle. During specific implementation, the first boundary of the first area may be detected positions of the lane lines on two sides of the first lane, and the second boundary may be a detected position of the head of the first vehicle and a detected position of the tail of the second vehicle. For example, in the area in which the dashed-line box 30 shown in FIG. 7a is located, the lane lines on two sides of the first lane are used as the first boundary of the first area, and a head of the vehicle A and a tail of a vehicle C are used as the second boundary of the first area.

It should be noted that, in FIG. 7a, only the dashed-line box 30 schematically represents a position of the first area. A shape, a size, and the like of the dashed-line box 30 do not represent a shape, a size, and the like of the first area. The shape of the first area determined based on the foregoing two manners is not limited to a rectangle. For example, a road is curved, and the first area may be an irregular polygon. The size of the determined first area may be greater than, equal to, or less than the size of the dashed-line box 30 shown in FIG. 7a. In addition, because vehicles move on the lane (including a straight lane, a curved lane, or the like), the first area is a dynamic area based on continuous displacement of the first vehicle, including but not limited to a dynamic change of the position of the first area, a dynamic change of the shape of the first area, and a dynamic change of the size of the first area.

For example, as shown in FIG. 7a, after determining the first area, the vehicle driving apparatus may use a central position $P(x1, y1)$ (represented by a solid circle in FIG. 7a) of the first area as a reference position of the first area. When performing vehicle driving control, the vehicle driving apparatus may use the reference position to represent the first area to monitor and analyze another vehicle other than the present vehicle, to implement driving control on the first vehicle.

S620: The vehicle driving apparatus obtains status information of a target vehicle.

In this embodiment of this application, the first vehicle may have an analysis range of the first vehicle, which is referred to as a second area, and the first area may be included in the second area. Before performing S620, the vehicle driving apparatus may determine the second area associated with the first vehicle, to determine the target vehicle, for example, an area represented by a dashed-line box 40 shown in FIG. 7a. For a manner of determining the second area, refer to the foregoing related description. Details are not described herein. For example, the target vehicle may be a unique vehicle in the second area, or a plurality of third vehicles located in the second area, or a vehicle with a highest queue-jumping probability in the plurality of third vehicles.

As shown in FIG. 7a, the dashed-line box 40 is used to represent the second area of the first vehicle (for example, the vehicle A). Starting from a situation in which a head line of a third vehicle (for example, a vehicle B) on an adjacent lane (including a second lane and a third lane) of the first lane is alongside a head line of the first vehicle, the third vehicle may enter the second area and become a potential queue jumper of the first vehicle, that is, a monitored object of the first vehicle. The vehicle driving apparatus may use the third vehicle as a candidate vehicle of the first vehicle, and obtain status information of the third vehicle.

The first vehicle may have at least one candidate vehicle (for example, the vehicle 4, the vehicle 5, and the vehicle 7 in FIG. 4). When status information of any candidate vehicle meets a preset condition for traveling into the first area, the vehicle driving apparatus may determine the candidate vehicle as a target vehicle of the first vehicle, and obtain status information of the target vehicle. For example, the status information of the candidate vehicle may include one or more pieces of the following information: an absolute position, a position relative to the first vehicle, a speed, an acceleration, and a heading angle. The vehicle driving apparatus may obtain each piece of status information of each candidate vehicle based on a plurality of sensors on the first vehicle.

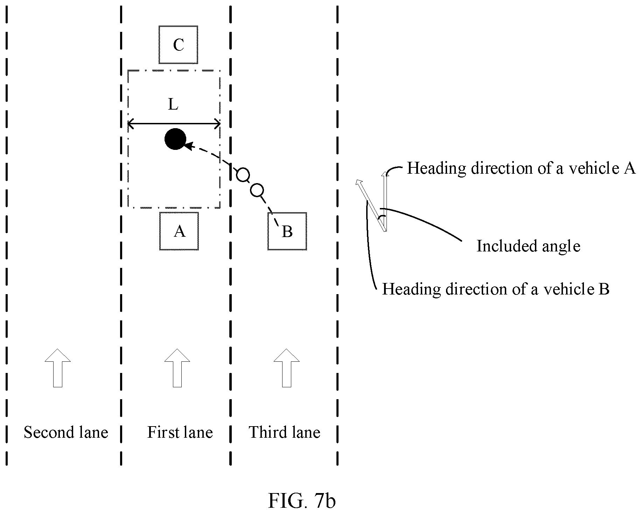

For example, the preset condition may include but is not limited to one or more of the following: a head of the candidate vehicle is in front of the head of the first vehicle (in other words, the candidate vehicle may be considered as a target vehicle only when a part or all of a body of the candidate vehicle is in the second area); a speed of the candidate vehicle is less than or equal to the speed of the first vehicle; a vehicle length of the candidate vehicle is less than or equal to a first length threshold; a transverse distance between the candidate vehicle and the first vehicle is less than or equal to a first safe distance threshold; an included angle between a heading angle of the candidate vehicle and a heading angle of the first vehicle is less than or equal to a first angle threshold; relative traffic efficiency of a lane on which the candidate vehicle is located is less than or equal to a first threshold; and a determined driving route overlaps the first area. For example, as shown in FIG. 7b, the first length threshold may be a spacing L of the second boundary of the first area, and the included angle is an included angle between a heading direction of the vehicle B and a heading direction of the vehicle A. That the driving route overlaps the first area may be that the driving route overlaps the first area, or the reference position of the first area is on the driving route (or within an allowed error range). For example, the first threshold may be 1, and the first angle threshold may be 5°.

The vehicle driving apparatus may perform calculation and determining based on the status information of the at least one candidate vehicle, to determine whether the at least one candidate vehicle meets one or more of the foregoing preset conditions. If a candidate vehicle does not meet any one of the foregoing preset conditions, it may be determined that the candidate vehicle has no queue-jumping intention, and the vehicle driving apparatus may exclude the candidate vehicle from being considered as a target vehicle. When a candidate vehicle meets at least one of the foregoing preset conditions, it is determined that the candidate vehicle has a queue-jumping intention. In this case, the vehicle driving apparatus may determine the candidate vehicle as a target vehicle of the first vehicle, and may start a queue-jumping game program of the first vehicle, so that the vehicle driving apparatus prevents a queue-jumping behavior of the target vehicle. When a candidate vehicle meets more of the foregoing preset conditions, it may be determined that a queue-jumping probability of the candidate vehicle is higher, and the vehicle driving apparatus needs to put more emphasis on monitoring and analyzing the candidate vehicle. For example, the status information of the target vehicle may include one or more pieces of the following information: an absolute position, a position relative to the first vehicle, a speed, an acceleration, and a heading angle.

In this way, from a moment at which a vehicle on an adjacent lane travels into the second area of the first vehicle, the vehicle driving apparatus may continuously monitor and analyze status information of a candidate vehicle, determine a driving route of the candidate vehicle, and determine, by using a slight status change or a driving route change of the candidate vehicle, whether the candidate vehicle has a queue-jumping intention and whether the candidate vehicle can be considered as a target vehicle of the first vehicle. In this embodiment of this application, that the vehicle driving apparatus determines a driving route of a candidate vehicle may include: The vehicle driving apparatus obtains a planned driving route of the candidate vehicle, or performs calculation by using status information of the candidate vehicle, to predict the driving route of the candidate vehicle. This is not limited in this embodiment of this application. For ease of description, an example in which a driving route of a candidate vehicle is predicted is used below for description, and should not be construed as a limitation on this embodiment of this application.

It should be noted that, in this embodiment of this application, the vehicle driving apparatus may predict a driving route of a vehicle in a plurality of manners. This is not limited in this embodiment of this application. For example, the vehicle driving apparatus may predict the driving route of the vehicle based on status information of the vehicle by using a dotting curve algorithm. A dashed-line arrow in FIG. 7a may represent a predicted driving route of the vehicle B, and a hollow circle may represent a position point on the predicted driving route of the vehicle B. In addition, the foregoing preset condition is merely an example of a condition that needs to be met to determine a queue-jumping intention of a candidate vehicle, and is not a limitation on the condition. In another embodiment, the queue-jumping intention of the candidate vehicle may alternatively be determined in another manner. Details are not described herein.

In an example, to improve calculation accuracy, when determining the target vehicle based on the status information of the at least one candidate vehicle, the vehicle driving apparatus may collect the status information of the at least one candidate vehicle in real time, and periodically perform calculation based on a specified cycle (for example, 100 milliseconds (ms)) to determine a queue-jumping intention of each candidate vehicle; and may determine the candidate vehicle as the target vehicle when at least two intention determining results of the candidate vehicle are true (that is, the candidate vehicle meets the preset condition for traveling into the first area). When the first vehicle has at least one target vehicle, the queue-jumping game program of the first vehicle may be started, to implement driving control on the first vehicle based on status information of the target vehicle by using the queue-jumping game program.

It should be noted that, in this embodiment of this application, the first vehicle may have no target vehicle, that is, there is no vehicle with a queue-jumping intention in the second area. Alternatively, the target vehicle of the first vehicle may be not limited to one target vehicle. As shown in FIG. 4, the vehicle 4, the vehicle 5, and the vehicle 7 may all be target vehicles of the vehicle 1. The vehicle driving apparatus may perform calculation by using related logic or algorithm configured by the vehicle driving apparatus, to determine the target vehicle. Alternatively, the vehicle driving apparatus may perform calculation by using a vehicle-mounted computing unit (for example, an advanced driver assistance system (Advanced Driver Assistance System, ADAS)) in the first vehicle, to determine the target vehicle. This is not limited in this embodiment of this application.

It should be understood that, when the first vehicle has at least one target vehicle, the vehicle driving apparatus may use the at least one target vehicle as the target vehicle in S620, or the vehicle driving apparatus may select, from the at least one target vehicle, a vehicle with a highest queue-jumping probability as the target vehicle in S620. This is not limited in this embodiment of this application. A queue-jumping probability of the at least one target vehicle may be determined through comprehensive determining based on the relative traffic efficiency of the lane, a queue-jumping gain of the vehicle, the safe distance, and the like. For example, the vehicle with the highest queue-jumping probability may be a vehicle that is located on a lane with lowest relative traffic efficiency, that has a highest queue-jumping benefit, and that meets a safe distance requirement.

S630: The vehicle driving apparatus controls a following distance between the first vehicle and the second vehicle based on the status information of the target vehicle.

Correspondingly, S640: The following distance between the first vehicle and the second vehicle dynamically changes with driving control performed on the first vehicle by the vehicle driving apparatus.

In this embodiment of this application, based on the target vehicle locked in S620, the vehicle driving apparatus may control the following distance between the first vehicle and the second vehicle based on the status information of the target vehicle. There may be at least one target vehicle locked in S620. The vehicle driving apparatus may have a capability of simultaneously monitoring and analyzing status information of the at least one target vehicle, and performing vehicle driving control on the present vehicle, and may perform comprehensive analysis based on the status information of the at least one target vehicle in S630, to control the following distance between the first vehicle and the second vehicle.

An example in which a single target vehicle is locked in S620 is used. In an example, when performing S630, the vehicle driving apparatus may predict a driving route of the target vehicle based on the status information of the target vehicle; and control the following distance between the first vehicle and the second vehicle based on a position relationship between the driving route of the target vehicle and the first area. In another example, when performing S630, the vehicle driving apparatus may predict, based on the status information of the target vehicle and status information of the first vehicle, a second probability that the first vehicle travels into the first area before the target vehicle; and control the following distance between the first vehicle and the second vehicle based on the second probability. An example in which at least two target vehicles are locked in S620 is used. When performing S630, the vehicle driving apparatus may combine status information of the at least two target vehicles, and control the following distance between the first vehicle and the at least two target vehicles based on driving routes of the at least two target vehicles or a third probability that the first vehicle travels into the first area before the at least two target vehicles.

For example, the controlling the following distance between the first vehicle and the second vehicle may include: The vehicle driving apparatus controls the first vehicle to accelerate, to reduce the following distance between the first vehicle and the second vehicle; or the vehicle driving apparatus controls the first vehicle to keep traveling at a current speed, to maintain a current following distance between the first vehicle and the second vehicle; or the vehicle driving apparatus controls the first vehicle to decelerate, to increase the following distance between the first vehicle and the second vehicle. Optionally, that the vehicle driving apparatus controls the first vehicle to accelerate may include: The vehicle driving apparatus determines target acceleration information of the first vehicle based on the status information of the target vehicle; and controls, based on the target acceleration information, the first vehicle to accelerate.

In this way, the vehicle driving apparatus may flexibly perform driving control on the first vehicle based on the status information of the at least one target vehicle around the first vehicle, to reduce a queue-jumping behavior of another vehicle by controlling the following distance between the first vehicle and the second vehicle in front of the first vehicle. In this method, the following distance between the first vehicle and the second vehicle in front may be flexibly adjusted. Therefore, the following distance may no longer be limited to a following distance adjustment gear that is fixedly set in an autonomous driving mode, thereby improving flexibility of driving control of the vehicle. In addition, when the queue-jumping behavior of the another vehicle is reduced, a sense of jerking may be reduced, and driving comfort may be improved, thereby ensuring driving experience.

In this embodiment of this application, monitoring and analysis algorithms for all target vehicles are the same or similar. For ease of description and understanding, the following uses a single target vehicle as an example to explain a specific implementation of reducing the following distance between the first vehicle and the second vehicle in 5630.

Example 1:

In this example, when performing S630, the vehicle driving apparatus may predict a driving route of the target vehicle based on the status information of the target vehicle; and control the following distance between the first vehicle and the second vehicle based on a position relationship between the driving route of the target vehicle and the first area.

As shown in FIG. 7a, the reference position P(x1, y1) in the first area represents the first area. P(x1, y1) may be used as a target point for the vehicle A (that is, the first vehicle) and the vehicle B (that is, the target vehicle) to perform a queue-jumping game. A queue-jumping intention of the target vehicle is to occupy the target point before the vehicle A, and a purpose of starting the queue-jumping game program by the vehicle A is to prevent the vehicle B from first occupying the target point. The vehicle driving apparatus may predict a driving route of the vehicle B in real time based on status information of the vehicle B. As shown in FIG. 7a, position points connected by the dashed-line arrow represent the driving route. If the reference position P(x1, y1) is on the predicted driving route of the vehicle B (or a relative position relationship between the reference position P(x1, y1) and the driving route is within an allowed distance error range), it indicates that the vehicle B still has a queue-jumping intention to travel into the first area. In this case, to prevent the vehicle B from occupying the target point before the vehicle A, the vehicle driving apparatus may use the reference position P(x1, y1) as a target of accelerated driving of the vehicle A to control the vehicle A to accelerate, to reduce a following distance between the vehicle A and the vehicle C.

When the vehicle driving apparatus controls the vehicle A to accelerate, the vehicle driving apparatus may predict a new driving route of the vehicle B in real time or periodically based on the status information of the vehicle B, to detect whether the vehicle B meets the preset condition for traveling into the first area. If the vehicle B does not accelerate, the vehicle driving apparatus may predict the driving route of the vehicle B based on real-time status information of the vehicle B. If the vehicle B accelerates, the vehicle driving apparatus may predict the driving route of the vehicle B in combination of an acceleration of the vehicle B. If there is no associated position relationship between the driving route of the vehicle B that is updated in real time or periodically (for example, a cycle is 50 ms) and the target point P(x1, y1), the vehicle B may have abandoned the queue-jumping behavior, that is, have no queue-jumping intention. The vehicle driving apparatus may determine that the vehicle A successfully prevents the queue-jumping behavior of the vehicle B. In this case, the vehicle driving apparatus may stop the accelerated driving behavior of the vehicle A in real time. For example, the vehicle A may travel at a constant speed by maintaining a current speed. Otherwise, the vehicle driving apparatus may continue to control the vehicle A to accelerate, until there is no possibility that the vehicle B successfully jumps a queue.

It should be noted that, in Example 1, the vehicle driving apparatus may control the vehicle A to accelerate at a maximum angular velocity a1 (which may be preset on the vehicle A before delivery, or adjusted by a user based on a driving requirement of the user), and in a process of controlling the vehicle A to accelerate, control, based on a change of the queue-jumping intention of the vehicle B, whether to stop the acceleration behavior. It should be understood that, in consideration of a traffic safety problem, when controlling the vehicle A to accelerate, the vehicle driving apparatus may alternatively stop the acceleration behavior of the vehicle A based on another factor, for example, whether the following distance between the vehicle A and the vehicle C reaches a vehicle distance threshold, or whether a speed of the vehicle A reaches a speed threshold. Details are not described herein.

It should be noted that, in Example 1, when traffic safety is ensured, the reference position P(x1, y1) may be a middle position of the first area, or a position of one third (closer to the vehicle in front) of the first area. A specific manner of selecting the reference position is not limited in this embodiment of this application.

Example 2:

In this example, when performing S630, the vehicle driving apparatus may predict, based on the status information of the target vehicle and status information of the first vehicle, a probability that the first vehicle travels into the first area before the target vehicle; and control the following distance between the first vehicle and the second vehicle based on the probability.

As shown in FIG. 7a, the reference position P(x1, y1) in the first area represents the first area. P(x1, y1) may be used as a target point for the vehicle A (that is, the first vehicle) and the vehicle B (that is, the target vehicle) to perform a queue-jumping game. A queue-jumping intention of the target vehicle is to occupy the target point before the vehicle A, and a purpose of starting the queue-jumping game program by the vehicle A is to prevent the vehicle B from first occupying the target point. During implementation, the vehicle driving apparatus may assume that both the vehicle A and the vehicle B use allowed maximum accelerations of the vehicle A and the vehicle B to accelerate, and determine which vehicle first occupies the target point, to obtain a probability that the vehicle A travels into the first area before the vehicle B.

a0 is used to represent a maximum acceleration of the vehicle B, and a value of a0 may be determined based on a vehicle model of the vehicle B. Allowed maximum accelerations of different vehicles may be fixed empirical values, or may be determined in advance by performing big data modeling based on different vehicle models. This is not limited in this embodiment of this application. a1 is used to represent a maximum acceleration of the vehicle A (which may be preset on the vehicle A before delivery, or adjusted by a user based on a driving requirement of the user). During calculation, the vehicle driving apparatus may assume that the vehicle A and the vehicle B travel from respective current positions by using respective accelerations a1 and a0, and calculate times required by the vehicle A and the vehicle B to travel from the respective current positions to the target point. If a time $t_A$ required by the vehicle A is less than or equal to a time $t_B$ required by the vehicle B, there is a probability (that is, a non-zero value) that the vehicle A prevents the vehicle B from occupying the target point before the vehicle A. In this case, the vehicle driving apparatus may control the vehicle A to accelerate, so that the vehicle A can prevent the vehicle B from occupying the target point before the vehicle A, thereby suppressing a queue-jumping behavior of the vehicle B.

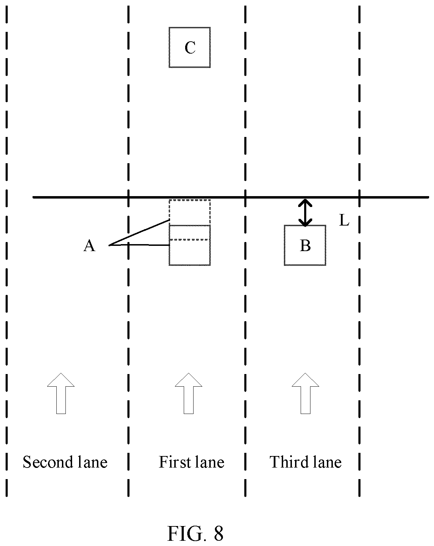

As shown in FIG. 8, the vehicle driving apparatus may use a predetermined distance, for example, in an interval of L (-2 meters, 2 meters), at which a head of the vehicle A is ahead of a head of the vehicle B as a target of accelerated driving of the vehicle A; calculate, based on the target, target acceleration information required for accelerated driving of the vehicle A, for example, including a target acceleration, a target acceleration time, and the like of the vehicle A; and control, based on the target acceleration information, the vehicle A to accelerate, to reduce the following distance between the vehicle A and the vehicle C.

In an example, the vehicle A is used as a coordinate origin of a reference system. If a current speed of the vehicle B is close to a current speed of the vehicle A (that is, a speed error of the two vehicles is in a predetermined range, and the two vehicles are relatively static), the vehicle driving apparatus may use a measured speed v0 and acceleration a0 of the vehicle B as a reference to design a speed or an acceleration of the vehicle A to be slightly higher than the speed or the acceleration of the vehicle B. For example, a target speed of the vehicle A is v1 = $z1 * v0$, and the target acceleration is $z2 * a0$. If z1 and z2 are greater than 1, a target acceleration time $t$ of the vehicle A is calculated based on the following expression:

$$t = \frac{-z1 * v0 \pm \sqrt{(z1 * v0)^2 + 2 * z2 * a0 * L * R}}{z2 * a0}$$

Herein, R is a random number, and may be used to randomly generate a distance at which the head of the vehicle A is ahead of the head of the vehicle B, to reduce a conflict between the vehicle A and the vehicle B.

The vehicle driving apparatus may control, based on the target acceleration information, the vehicle A to accelerate, and restore a following speed of the vehicle A when the target acceleration time is reached, for example, travel at a constant speed by maintaining a current speed (for example, a speed at which the target acceleration time is reached).

It should be noted that in this example, in a process in which the vehicle driving apparatus controls, based on the target acceleration information, the vehicle A to accelerate, the vehicle driving apparatus may further predict a new driving route of the vehicle B in real time or periodically based on the status information of the vehicle B. If the vehicle B does not accelerate, the vehicle driving apparatus may predict the driving route of the vehicle B based on real-time status information of the vehicle B. If the vehicle B accelerates, the vehicle driving apparatus may predict the driving route of the vehicle B in combination of an acceleration of the vehicle B. If there is no associated position relationship between the driving route of the vehicle B that is updated in real time or periodically (for example, a cycle is 50 ms) and the first area, the vehicle B may have abandoned the queue-jumping behavior, that is, have no queue-jumping intention. The vehicle driving apparatus may determine that the vehicle A successfully prevents the queue-jumping behavior of the vehicle B. In this case, the vehicle driving apparatus may stop the accelerated driving behavior of the vehicle A in real time. For example, the vehicle A may travel at a constant speed by maintaining a current speed. Otherwise, the vehicle driving apparatus may control the vehicle A to continue to accelerate based on the target acceleration information, until the target acceleration time is reached. Alternatively, in an accelerated driving process based on the target acceleration information, if the vehicle driving apparatus can ensure that the vehicle A can be always in a state in which the vehicle A can reach the target point P(x1, y1) before the vehicle B, and there is no possibility (that is, a probability is 0) that the vehicle B reaches the target point P(x1, y1) before the vehicle A, for example, the following distance between the vehicle A and the vehicle C is not large enough to accommodate the vehicle B for safe driving, the vehicle driving apparatus may stop the accelerated driving behavior of the vehicle A in real time. For example, the vehicle A may travel at a constant speed by maintaining a current speed. Otherwise, the vehicle driving apparatus may control the vehicle A to continue to accelerate based on the target acceleration information, until the queue-jumping behavior of the vehicle B is successfully prevented. Similar to Example 1, in Example 2, in consideration of a traffic safety problem, when controlling the vehicle A to accelerate, the vehicle driving apparatus may alternatively stop the acceleration behavior of the vehicle A based on another factor, for example, whether the following distance between the vehicle A and the vehicle C reaches a vehicle distance threshold, or whether a speed of the vehicle A reaches a speed threshold. Details are not described herein.

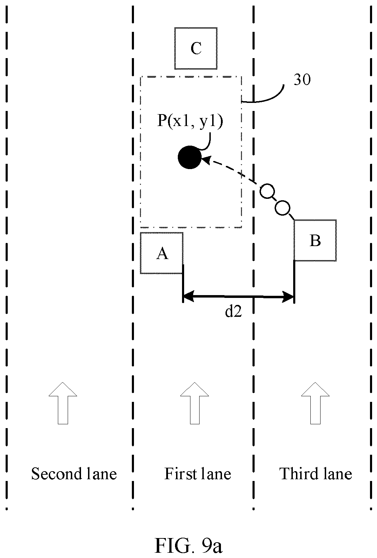

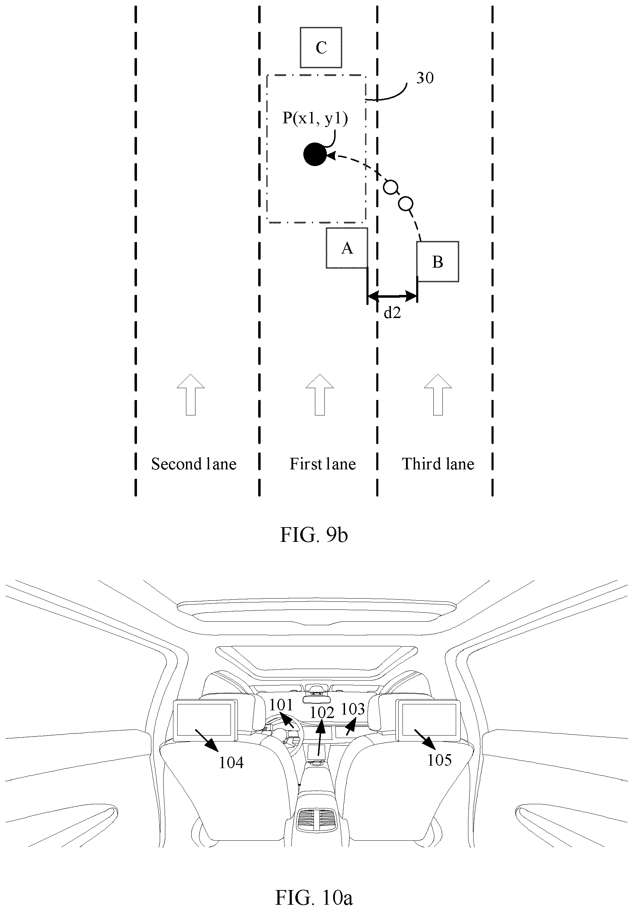

It should be noted that, in the foregoing examples, the vehicle driving apparatus may usually control the first vehicle (for example, the vehicle A) to travel in the middle of the lane (for example, the first lane) on which the first vehicle is currently located. In addition, the reference position P(x1, y1) may be always defined as the central position of the first area. As shown in FIG. 9a and FIG. 9b, the vehicle driving apparatus may further control a position (not limited to traveling in the middle) of the first vehicle (for example, the vehicle A) on the current lane (for example, the first lane) to perform speed compensation on the first vehicle, to increase a probability that the first vehicle successfully prevents the queue-jumping behavior of the target vehicle.

As shown in FIG. 9a, if a head position of the vehicle B is already ahead of the vehicle A, the vehicle driving apparatus may control the vehicle A to travel near a left lane line on the first lane, that is, the vehicle A gets away from the vehicle B to increase a transverse distance d2 between the two vehicles; and control the vehicle A to accelerate, and predict the driving route of the vehicle B, to control a following distance between the vehicle A and the vehicle B. In this way, because d2 is increased, when the vehicle driving apparatus controls the vehicle A to accelerate, relatively large maneuvering space may be provided for the vehicle A, thereby increasing a possibility that the vehicle A occupies the target point in the first area before the vehicle B. As shown in FIG. 9b, if the head position of the vehicle B is not ahead of the vehicle A, the vehicle driving apparatus may control the vehicle A to travel near a right lane line on the first lane, that is, the vehicle A approaches the vehicle B to decrease the transverse distance d2 between the two vehicles; and control the vehicle A to accelerate, and predict the driving route of the vehicle B, to control the following distance between the vehicle A and the vehicle B. In this way, because d2 is decreased, a probability that the vehicle B abandons the queue-jumping behavior is increased.

It should be understood that FIG. 9a and FIG. 9b are merely possible designs in which the vehicle driving apparatus controls the vehicle A to prevent the queue-jumping behavior of the target vehicle, and impose no limitation. There may be another implementation in another embodiment. This is not limited in this embodiment of this application. In addition, it should be noted that, when controlling a position of the first vehicle on the first lane, the vehicle driving apparatus further needs to consider traffic safety. For example, the first vehicle cannot exceed the lane lines on two sides of the first lane. When controlling the first vehicle to travel on the left on the first lane, the vehicle driving apparatus further needs to pay attention to avoiding another vehicle on an adjacent lane (for example, the second lane) on a left side or an adjacent lane (for example, the third lane) on a right side. Details are not described herein.

In this way, according to the foregoing vehicle driving method, the vehicle driving apparatus may dynamically adjust, with reference to status information of another vehicle around the first vehicle and by analyzing a queue-jumping intention of the another vehicle, the following distance between the first vehicle and the second vehicle that is located on the same lane and in front of the first vehicle, to reduce, as much as possible, a probability that the first area associated with the first vehicle is first occupied by the another vehicle, thereby suppressing a queue-jumping behavior of the another vehicle. In this method, the following distance between the first vehicle and the second vehicle in front may be flexibly adjusted. Therefore, the following distance may no longer be limited to a following distance adjustment gear that is fixedly set in an autonomous driving mode, thereby improving flexibility of driving control of the vehicle. In addition, when the queue-jumping behavior of the another vehicle is reduced, a sense of jerking may be reduced, and driving comfort may be improved, thereby ensuring driving experience.

In addition, when the vehicle driving method of S610 to S640 is performed, on a first vehicle side, the vehicle driving apparatus may further output related information on a human-machine interaction (Human-Machine Interaction, HMI) interface of the first vehicle, so that a driver on the first vehicle side can conveniently implement driving control on the first vehicle or learn of a driving control process of the first vehicle based on the related information output by the HMI.

FIG. 10a shows a schematic diagram of a structure of an interior of a vehicle. HMI may be a screen (or referred to as a center console display screen or a center console screen) of an in-vehicle infotainment system. The HMI may output a first picture in real time. The first picture may include a third area and a target vehicle, the third area includes at least a first area associated with a first vehicle, the first area is located on a first lane and in front of the first vehicle, the target vehicle is located on an adjacent lane of the first lane, and status information of the target vehicle meets a preset condition for traveling into the third area. In addition, another display apparatus may also be disposed inside the vehicle, and is configured to display a digital dashboard; or another display may be disposed, to meet in-vehicle infotainment requirements at more positions. As shown in FIG. 10a, a plurality of displays are disposed in the vehicle, for example, a digital instrument display 101, a center console screen 102, a display 103 in front of a passenger (also referred to as a front-row passenger) in a front passenger seat, a display 104 in front of a rear-row passenger on a left side, and a display 105 in front of a rear-row passenger on a right side.

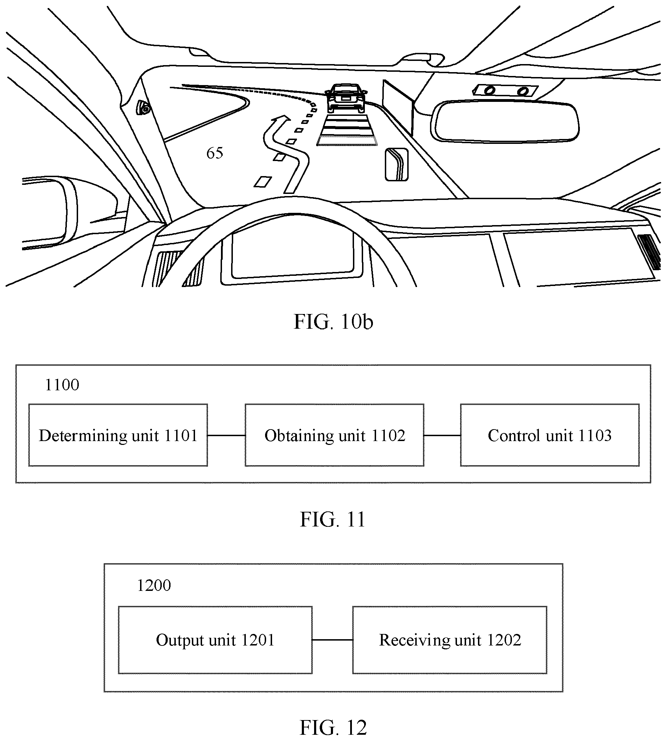

FIG. 10b shows a schematic diagram of a head-up display (head-up display, HUD) scenario to which an embodiment of this application is applicable. An HUD technology is also referred to as a head-up display technology, and has been gradually applied increasingly more widely in the automotive field, the aerospace field, and the seafaring field in recent years. An image projection apparatus in an HUD apparatus projects important information during vehicle driving onto a windshield, and after reflection by the windshield, a virtual image is formed right in front of a line of sight of a driver, so that the driver can see the information without lowering a head. Compared with a display manner in which the driver needs to lower the head to observe, such as the dashboard or the center console screen in FIG. 10a, the HUD reduces a driving risk that may be caused by inability of the driver to consider a road condition when the driver lowers the head to observe, and an eye pupil change due to a change of the line of sight of the driver, and is a safer in-vehicle display manner to which this embodiment of this application is applicable. In addition, to avoid interfering with the road condition, this embodiment of this application is further applicable to augmented reality (augmented reality, AR) HUD (AR-HUD), in which a digital image is superimposed on a real environment outside a vehicle, so that the driver obtains a visual effect of augmented reality. The AR-HUD may be used for AR navigation, adaptive cruise control, lane departure warning, and the like. This is not limited in this embodiment of this application.

An embodiment of this application further provides a vehicle driving apparatus, configured to perform the method performed by the vehicle driving apparatus in the foregoing embodiment. For related features, refer to the foregoing method embodiment. Details are not described herein.

As shown in FIG. 11, the apparatus 1100 may include: a determining unit 1101, configured to determine a first area associated with a first vehicle, where the first vehicle is located on a first lane, and the first area is located on the first lane and in front of the first vehicle; an obtaining unit 1102, configured to obtain status information of a target vehicle, where the target vehicle is located on an adjacent lane of the first lane, and the status information of the target vehicle meets a preset condition for traveling into the first area; and a control unit 1103, configured to control a following distance between the first vehicle and a second vehicle based on the status information of the target vehicle, where the second vehicle is an adjacent vehicle that is located on the first lane and that travels in front of the first vehicle. For a specific implementation, refer to detailed descriptions in the embodiments shown in FIG. 1 to FIG. 10b. Details are not described herein.

An embodiment of this application further provides a vehicle driving apparatus, configured to perform the method performed by the vehicle driving apparatus in the foregoing method embodiment. For related features, refer to the foregoing method embodiment. Details are not described herein.

As shown in FIG. 12, the apparatus 1200 may include: an output unit 1201, configured to output a first picture on a human-machine interaction HMI interface of a first vehicle, where the first vehicle is located on a first lane, the first picture includes a third area and a target vehicle, the third area includes at least a first area associated with the shown first vehicle, the first area is located on the first lane and in front of the first vehicle, the target vehicle is located on an adjacent lane of the first lane, and status information of the target vehicle meets a preset condition for traveling into the third area; and a receiving unit 1202, configured to receive control information from a driver of the first vehicle, where the control information is used to control a following distance between the first vehicle and a second vehicle, and the control information is associated with the first picture. For a specific implementation, refer to detailed descriptions in the embodiments shown in FIG. 1 to FIG. 10b. Details are not described herein.

It should be noted that, in embodiments of this application, unit division is an example, and is merely logical function division. During actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to some solutions, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

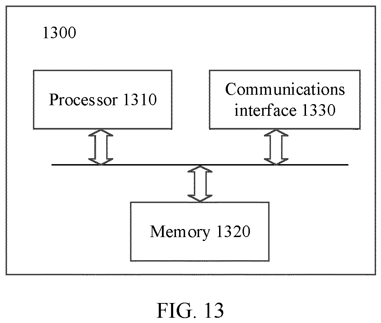

In a simple embodiment, a person skilled in the art may figure out that the remote diagnosis apparatus or the diagnosis agent apparatus on the vehicle side in the foregoing embodiment may use a form shown in FIG. 13.

An apparatus 1300 shown in FIG. 13 includes at least one processor 1310 and a memory 1320, and optionally, may further include a communications interface 1330.

A specific connection medium between the processor 1310 and the memory 1320 is not limited in this embodiment of this application.

The apparatus in FIG. 13 further includes the communications interface 1330. When communicating with another device, the processor 1310 may transmit data by using the communications interface 1330.

When the remote diagnosis apparatus uses the form shown in FIG. 13, the processor 1310 in FIG. 13 may invoke computer executable instructions stored in the memory 1320, so that the device 1300 can perform the method performed by the remote diagnosis apparatus in any one of the foregoing method embodiments.

When the diagnosis agent apparatus on the vehicle side uses the form shown in FIG. 13, the processor 1310 in FIG. 13 may invoke computer executable instructions stored in the memory 1320, so that the device 1300 can perform the method performed by the diagnosis agent apparatus in any one of the foregoing method embodiments.

An embodiment of this application further relates to a chip system. The chip system includes a processor, configured to invoke a computer program or computer instructions stored in a memory, so that the processor performs the method in any one of the foregoing method embodiments.

In a possible implementation, the processor is coupled to the memory by using an interface.

In a possible implementation, the chip system further includes a memory, and the memory stores a computer program or computer instructions.

An embodiment of this application further relates to a processor. The processor is configured to invoke a computer program or computer instructions stored in a memory, so that the processor performs the method in any one of the foregoing method embodiments.

Any one of the processors mentioned above may be a general-purpose central processing unit, a microprocessor, an application-specific integrated circuit (application-specific integrated circuit, ASIC), or one or more integrated circuits configured to control program execution of the method in any one of the foregoing method embodiments. Any one of the memories mentioned above may be a read-only memory (read-only memory, ROM), another type of static storage device that can store static information and instructions, a random access memory (random access memory, RAM), or the like.

It should be understood that an embodiment of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations of embodiments of this application provided that they fall within the scope of the claims of this application and their equivalent technologies.

## Claims

1. A vehicle driving method, comprising:

   determining a first area associated with a first vehicle, wherein the first vehicle is located on a first lane, and the first area is located on the first lane and in front of the first vehicle;
   obtaining status information of a target vehicle, wherein the target vehicle is located on an adjacent lane of the first lane, and the status information of the target vehicle meets a preset condition for traveling into the first area; and
   controlling a following distance between the first vehicle and a second vehicle based on the status information of the target vehicle, wherein the second vehicle is an adjacent vehicle that is located on the first lane and that travels in front of the first vehicle.

2. The method according to claim 1, wherein the method further comprises:
   outputting the first area on a human-machine interaction HMI interface of the first vehicle, wherein a first boundary of the first area is associated with lane lines on two sides of the first lane, and a second boundary of the first area is associated with a head of the first vehicle and a tail of the second vehicle.

3. The method according to claim 1 or 2, wherein the target vehicle is a unique vehicle in a second area, or a plurality of third vehicles located in the second area, or a vehicle with a highest queue-jumping probability in the plurality of third vehicles, and the first area is comprised in the second area.

4. The method according to any one of claims 1 to 3, wherein the controlling a following distance between the first vehicle and a second vehicle based on the status information of the target vehicle comprises:

   determining a driving route of the target vehicle based on the status information of the target vehicle; and
   controlling the following distance between the first vehicle and the second vehicle based on a position relationship between the driving route of the target vehicle and the first area.

5. The method according to any one of claims 1 to 3, wherein the controlling a following distance between the first vehicle and a second vehicle based on the status information of the target vehicle comprises:

   determining, based on the status information of the target vehicle and status information of the first vehicle, a probability that the first vehicle travels into the first area before the target vehicle; and
   controlling the following distance between the first vehicle and the second vehicle based on the probability.

6. The method according to claim 4 or 5, wherein the controlling the following distance between the first vehicle and the second vehicle comprises:
   adjusting the following distance between the first vehicle and the second vehicle by controlling the first vehicle to accelerate.

7. The method according to claim 6, wherein the controlling the first vehicle to accelerate comprises:

   determining target acceleration information of the first vehicle based on the status information of the target vehicle; and
   controlling, based on the target acceleration information, the first vehicle to accelerate.

8. The method according to any one of claims 1 to 7, wherein the preset condition comprises one or more of the following:

a head of the target vehicle is in front of the head of the first vehicle;

a speed of the target vehicle is less than or equal to a speed of the first vehicle;

a vehicle length of the target vehicle is less than or equal to a first length threshold;

a transverse distance between the target vehicle and the first vehicle is less than or equal to a first safe distance threshold; and

an included angle between a heading angle of the target vehicle and a heading angle of the first vehicle is less than or equal to a first angle threshold.

9. The method according to any one of claims 1 to 8, wherein the following distance between the first vehicle and the first vehicle is greater than or equal to the first safe distance threshold.

10. A vehicle driving method, comprising:

outputting a first picture on a human-machine interaction HMI interface of a first vehicle, wherein the first vehicle is located on a first lane, the first picture comprises a third area and a target vehicle, the third area comprises at least a first area associated with the first vehicle, the first area is located on the first lane and in front of the first vehicle, the target vehicle is located on an adjacent lane of the first lane, and status information of the target vehicle meets a preset condition for traveling into the third area; and

receiving control information from a driver of the first vehicle, wherein the control information is used to control a following distance between the first vehicle and a second vehicle, and the control information is associated with the first picture.

11. The method according to claim 10, wherein a first boundary of the first area is associated with lane lines on two sides of the first lane, a second boundary of the first area is associated with a head of the first vehicle and a tail of the second vehicle, and the second vehicle is an adjacent vehicle that is located on the first lane and that travels in front of the first vehicle.

12. The method according to claim 10 or 11, wherein the preset condition comprises one or more of the following:

a head of the target vehicle is in front of the head of the first vehicle;

a speed of the target vehicle is less than or equal to a speed of the first vehicle;

a vehicle length of the target vehicle is less than or equal to a first length threshold;

a transverse distance between the target vehicle and the first vehicle is less than or equal to a first safe distance threshold; and

an included angle between a heading angle of the target vehicle and a heading angle of the first vehicle is less than or equal to a first angle threshold.

13. A vehicle driving apparatus, comprising:

a determining unit, configured to determine a first area associated with a first vehicle, wherein the first vehicle is located on a first lane, and the first area is located on the first lane and in front of the first vehicle;

an obtaining unit, configured to obtain status information of a target vehicle, wherein the target vehicle is located on an adjacent lane of the first lane, and the status information of the target vehicle meets a preset condition for traveling into the first area; and

a control unit, configured to control a following distance between the first vehicle and a second vehicle based on the status information of the target vehicle, wherein the second vehicle is an adjacent vehicle that is located on the first lane and that travels in front of the first vehicle.

14. The apparatus according to claim 13, wherein the apparatus further comprises:
an output unit, configured to output the first area on a human-machine interaction HMI interface of the first vehicle, wherein a first boundary of the first area is associated with lane lines on two sides of the first lane, and a second boundary of the first area is associated with a head of the first vehicle and a tail of the second vehicle.

15. The apparatus according to claim 13 or 14, wherein the target vehicle is a unique vehicle in a second area, or a plurality of third vehicles located in the second area, or a vehicle with a highest queue-jumping probability in the plurality of third vehicles, and the first area is comprised in the second area.

16. The apparatus according to any one of claims 13 to 15, wherein the control unit is configured to:

determine a driving route of the target vehicle based on the status information of the target vehicle; and
control the following distance between the first vehicle and the second vehicle based on a position relationship between the driving route of the target vehicle and the first area.

17. The apparatus according to any one of claims 13 to 15, wherein the control unit is configured to:

determine, based on the status information of the target vehicle and status information of the first vehicle, a probability that the first vehicle travels into the first area before the target vehicle; and
control the following distance between the first vehicle and the second vehicle based on the probability.

18. The apparatus according to claim 16 or 17, wherein the control unit is configured to:
adjust the following distance between the first vehicle and the second vehicle by controlling the first vehicle to accelerate.

19. The apparatus according to claim 18, wherein that the control unit controls the first vehicle to accelerate comprises:

determining target acceleration information of the first vehicle based on the status information of the target vehicle; and
controlling, based on the target acceleration information, the first vehicle to accelerate.

20. The apparatus according to any one of claims 13 to 19, wherein the preset condition comprises one or more of the following:

a head of the target vehicle is in front of the head of the first vehicle;
a speed of the target vehicle is less than or equal to a speed of the first vehicle;
a vehicle length of the target vehicle is less than or equal to a first length threshold;
a transverse distance between the target vehicle and the first vehicle is less than or equal to a first safe distance threshold; and
an included angle between a heading angle of the target vehicle and a heading angle of the first vehicle is less than or equal to a first angle threshold.

21. The apparatus according to any one of claims 13 to 20, wherein the following distance between the first vehicle and the first vehicle is greater than or equal to the first safe distance threshold.

22. A vehicle driving apparatus, comprising:

an output unit, configured to output a first picture on a human-machine interaction HMI interface of a first vehicle, wherein the first vehicle is located on a first lane, the first picture comprises a third area and a target vehicle, the third area comprises at least a first area associated with the shown first vehicle, the first area is located on the first lane and in front of the first vehicle, the target vehicle is located on an adjacent lane of the first lane, and status information of the target vehicle meets a preset condition for traveling into the third area; and
a receiving unit, configured to receive control information from a driver of the first vehicle, wherein the control information is used to control a following distance between the first vehicle and a second vehicle, and the control information is associated with the first picture.

23. The apparatus according to claim 22, wherein a first boundary of the first area is associated with lane lines on two sides of the first lane, a second boundary of the first area is associated with a head of the first vehicle and a tail of the second vehicle, and the second vehicle is an adjacent vehicle that is located on the first lane and that travels in front of the first vehicle.

24. The apparatus according to claim 22 or 23, wherein the preset condition comprises one or more of the following:

a head of the target vehicle is in front of the head of the first vehicle;
a speed of the target vehicle is less than or equal to a speed of the first vehicle;
a vehicle length of the target vehicle is less than or equal to a first length threshold;
a transverse distance between the target vehicle and the first vehicle is less than or equal to a first safe distance threshold; and
an included angle between a heading angle of the target vehicle and a heading angle of the first vehicle is less than or equal to a first angle threshold.

25. A vehicle driving apparatus, comprising a processor and a memory, wherein

the memory is configured to store a program; and
the processor is configured to execute the program stored in the memory, so that the apparatus implements the method according to any one of claims 1 to 9.

26. A vehicle driving apparatus, comprising a processor and a memory, wherein

the memory is configured to store a program; and
the processor is configured to execute the program stored in the memory, so that the apparatus implements the method according to any one of claims 10 to 12.

27. A vehicle driving system, comprising:

the vehicle driving apparatus according to any one of claims 13 to 21; and
the vehicle driving apparatus according to any one of claims 22 to 24.

28. A computer-readable storage medium, wherein the computer-readable medium stores program code, and when the program code is run on a computer, the computer is enabled to perform the method according to any one of claims 1 to 9; or when the program code is run on a computer, the computer is enabled to perform the method according to any one of claims 10 to 12.

Cloud

Vehicle 1

Roadside unit

Vehicle 2

Vehicle 3

FIG. 1

FIG. 2

FIG. 3

FIG. 4

FIG. 5

| Second vehicle | Vehicle driving apparatus | Target vehicle |

S610: Determine a first area associated with a first vehicle

S620: Status information

S630: Control a following distance between the first vehicle and the second vehicle based on the status information of the target vehicle

S640: Following distance

FIG. 6

FIG. 7a

FIG. 7b

FIG. 8

FIG. 9a

FIG. 9b

FIG. 10a

EP 4 382 384 A1

FIG. 10b

| | | |
|---|---|---|
| 1100 | | |
| Determining unit 1101 | Obtaining unit 1102 | Control unit 1103 |

FIG. 11

| | |
|---|---|
| 1200 | |
| Output unit 1201 | Receiving unit 1202 |

FIG. 12

36

FIG. 13

## INTERNATIONAL SEARCH REPORT

| | International application No. |
|---|---|
| | **PCT/CN2021/112151** |

**A. CLASSIFICATION OF SUBJECT MATTER**

B60W 30/16(2020.01)i; B60W 30/09(2012.01)i; B60W 30/095(2012.01)i

According to International Patent Classification (IPC) or to both national classification and IPC

**B. FIELDS SEARCHED**

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNABS; DWPI, SIPOABS, VEN; CNKI: 自动驾驶, 变道, 防止, 加塞, 速度, 跟车, 距离, auto driving, lane? 5d chang+, prevent, cutting in , plugging, interrupt+, follow, speed, distance

**C. DOCUMENTS CONSIDERED TO BE RELEVANT**

| Category* | Citation of document, with indication, where appropriate, of the relevant passages | Relevant to claim No. |
|---|---|---|
| X | CN 109466554 A (GUANGZHOU XPENG AUTOMOBILE TECHNOLOGY CO., LTD.) 15 March 2019 (2019-03-15)<br>description, paragraphs 0034-0225, claims 1-2 and 7, and figures 1-7 | 1-4, 8-16, 20-28 |
| Y | CN 109466554 A (GUANGZHOU XPENG AUTOMOBILE TECHNOLOGY CO., LTD.) 15 March 2019 (2019-03-15)<br>description, paragraphs 0034-0225, claims 1-2 and 7, and figures 1-7 | 5-7, 17-19 |
| Y | CN 110588647 A (GUANGZHOU XPENG AUTOMOBILE TECHNOLOGY CO., LTD.) 20 December 2019 (2019-12-20)<br>description, paragraphs 0071-0159, claims 1-7, and figures 1-3 | 5-7, 17-19 |
| A | CN 107792072 A (HYUNDAI MOTOR CO., LTD.) 13 March 2018 (2018-03-13)<br>entire document | 1-28 |
| A | CN 112061126 A (GREAT WALL MOTOR COMPANY LIMITED) 11 December 2020 (2020-12-11)<br>entire document | 1-28 |
| A | CN 111547055 A (ZHEJIANG GEELY AUTOMOBILE RESEARCH INSTITUTE CO., LTD. et al.) 18 August 2020 (2020-08-18)<br>entire document | 1-28 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 April 2022** | **12 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/112151** |

**C.      DOCUMENTS CONSIDERED TO BE RELEVANT**

| Category* | Citation of document, with indication, where appropriate, of the relevant passages | Relevant to claim No. |
| --- | --- | --- |
| A | US 2018057000 A1 (HYUNDAI MOTOR CO., LTD.) 01 March 2018 (2018-03-01)<br>      entire document | 1-28 |

Form PCT/ISA/210 (second sheet) (January 2015)

**INTERNATIONAL SEARCH REPORT**
Information on patent family members

International application No.

**PCT/CN2021/112151**

| Patent document cited in search report | | | Publication date (day/month/year) | Patent family member(s) | | | Publication date (day/month/year) |
|---|---|---|---|---|---|---|---|
| CN | 109466554 | A | 15 March 2019 | None | | | |
| CN | 110588647 | A | 20 December 2019 | None | | | |
| CN | 107792072 | A | 13 March 2018 | US | 2018057000 | A1 | 01 March 2018 |
| | | | | DE | 102016224124 | A1 | 01 March 2018 |
| | | | | US | 2018057002 | A1 | 01 March 2018 |
| | | | | KR | 20180024414 | A | 08 March 2018 |
| CN | 112061126 | A | 11 December 2020 | None | | | |
| CN | 111547055 | A | 18 August 2020 | None | | | |
| US | 2018057000 | A1 | 01 March 2018 | DE | 102016224124 | A1 | 01 March 2018 |
| | | | | CN | 107792072 | A | 13 March 2018 |
| | | | | US | 2018057002 | A1 | 01 March 2018 |
| | | | | KR | 20180024414 | A | 08 March 2018 |

Form PCT/ISA/210 (patent family annex) (January 2015)